(19)

Europäisches Patentamt

European Patent Office

Office européen des brevets

(11)  **EP 4 571 785 A1**

(12)  **EUROPEAN PATENT APPLICATION**
published in accordance with Art. 153(4) EPC

(43) Date of publication:
**18.06.2025  Bulletin 2025/25**

(21) Application number: **23852379.9**

(22) Date of filing: **26.07.2023**

(51) International Patent Classification (IPC):
$H01B\ 1/06^{(2006.01)}$      $C01B\ 25/14^{(2006.01)}$
$H01B\ 1/10^{(2006.01)}$      $H01B\ 13/00^{(2006.01)}$
$H01M\ 4/13^{(2010.01)}$     $H01M\ 4/62^{(2006.01)}$
$H01M\ 10/052^{(2010.01)}$   $H01M\ 10/0562^{(2010.01)}$

(52) Cooperative Patent Classification (CPC):
**C01B 25/14; H01B 1/06; H01B 1/10; H01B 13/00;
H01M 4/13; H01M 4/62; H01M 10/052;
H01M 10/0562;** Y02E 60/10

(86) International application number:
**PCT/JP2023/027435**

(87) International publication number:
**WO 2024/034405 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022  JP 2022128495
10.08.2022  JP 2022128496
10.08.2022  JP 2022128497**

(71) Applicant: **Furukawa Co., Ltd.
Chiyoda-ku
Tokyo 100-8370 (JP)**

(72) Inventor: **YOSHIDA Tatsushi
Tsukuba-shi, Ibaraki 305-0856 (JP)**

(74) Representative: **Müller, Christian Stefan Gerd
ZSP Patentanwälte PartG mbB
Hansastraße 32
80686 München (DE)**

(54)  **PHOSPHORUS SULFIDE COMPOSITION FOR SULFIDE-BASED INORGANIC SOLID ELECTROLYTE MATERIAL, METHOD FOR PRODUCING SULFIDE-BASED INORGANIC SOLID ELECTROLYTE MATERIAL, AND METHOD OF QUALITY CONTROL FOR PHOSPHORUS SULFIDE COMPOSITION**

(57)      Provided is a phosphorus sulfide composition for a sulfide-based inorganic solid electrolyte material, in which Reactivity measured by a predetermined method is greater than or equal to 5.0 °C/min.

FIG. 3

**EP 4 571 785 A1**

**Description**

TECHNICAL FIELD

The present invention relates to a phosphorus sulfide composition for a sulfide-based inorganic solid electrolyte material, a method of producing a sulfide-based inorganic solid electrolyte material, and a quality control method for a phosphorus sulfide composition.

BACKGROUND ART

In the related art, an electrolyte containing a flammable organic solvent is used in a lithium ion battery, and from the viewpoint of further increasing safety, development of a lithium ion battery in which the electrolyte is replaced with a solid electrolyte to make the battery an all-solid state is in progress. In addition, since a flammable organic solvent is not required, a safety device can be simplified, and production cost and productivity are excellent.

As a solid electrolyte material used for the solid electrolyte, for example, a sulfide-based inorganic solid electrolyte material is known.

The sulfide-based inorganic solid electrolyte material is required to have a high lithium ion conductivity in order to cope with charging and discharging with a large current.

For example, Patent Document 1 discloses a Li-P-S-based sulfide-based inorganic solid electrolyte material having a high lithium ion conductivity.

Specifically, Patent Document 1 discloses a sulfide solid electrolyte material containing a Li element, a P element, and a S element, peaks are present at positions of $2\theta = 17.90 \pm 0.20°$, $29.0 \pm 0.50°$, and $29.75 \pm 0.25°$ in which in powder X-ray diffraction measurement using a Cu-K$\alpha$ ray having an X-ray wavelength of 1.5418 angstroms, and in a case where a diffraction intensity of the peak at $2\theta = 17.90 \pm 0.20°$ is defined as $I_A$ and a diffraction intensity of the peak at $2\theta = 18.50 \pm 0.20°$ is defined as $I_B$, a value of $I_B/I_A$ is less than 0.50, the sulfide solid electrolyte material includes a plurality of $PS_4$ tetrahedra, the $PS_4$ tetrahedra are arranged such that orientations of the $PS_4$ tetrahedron vertices are staggered, the $PS_4$ tetrahedra do not share a ridge, and the sulfide solid electrolyte material has a crystal structure that a ratio of a maximum axis length to a minimum axis length among lattice constants determined by the diffraction measurement is less than or equal to 1.1, and a diffraction intensity of the peak at $2\theta = 29.0 \pm 0.50°$ is less than a diffraction intensity of the peak at $2\theta = 29.75 \pm 0.25°$.

RELATED DOCUMENT

PATENT DOCUMENT

Patent Document 1: Japanese Patent No. 6861869

SUMMARY OF THE INVENTION

TECHNICAL PROBLEM

However, the sulfide inorganic solid electrolyte material disclosed in Patent Document 1 has room for improvement in terms that a complicated step of vacuum sealing is required in a case of production.

The present inventors have conducted intensive examination on the production of a sulfide-based inorganic solid electrolyte material. As a result, it was found that, by evaluating and selecting a phosphorus sulfide composition, which is a raw material of a sulfide-based inorganic solid electrolyte material, using an index called "Reactivity", a sulfide-based inorganic solid electrolyte material having an improved lithium ion conductivity can be obtained without requiring a vacuum sealing step, thereby completing the present invention.

The present invention has been made in consideration of the above-described circumstances, and an object thereof is to provide a phosphorus sulfide composition for a sulfide-based inorganic solid electrolyte material, which is capable of preparing a sulfide-based inorganic solid electrolyte material having improved lithium ion conductivity, a method of producing a sulfide-based inorganic solid electrolyte material, which enables preparation of a sulfide-based inorganic solid electrolyte material having improved lithium ion conductivity, and a sulfide-based inorganic solid electrolyte material having improved lithium ion conductivity.

SOLUTION TO PROBLEM

The present inventors have completed the invention provided below, thereby solving the above-described problems.

1. A phosphorus sulfide composition for a sulfide-based inorganic solid electrolyte material, in which Reactivity measured by a following [Method 1] is greater than or equal to 5.0 °C/min.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.

Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.

A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.

A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.

The Reactivity is derived by Equation (1).

$$\text{Reactivity} = (Tm_{max} - Tm_0)/(T_{max} - T_0) \quad (1)$$

2. The phosphorus sulfide composition according to 1, including: $P_2S_5$.

3. The phosphorus sulfide composition according to 2., in which a content of the $P_2S_5$ in the phosphorus sulfide composition is greater than or equal to 95% by mass.

4. The phosphorus sulfide composition according to any one of 1. to 3., in which the phosphorus sulfide composition is in a powder form.

5. A raw material composition for a sulfide-based inorganic solid electrolyte material, including: the phosphorus sulfide composition according to any one of 1. to 4.; and lithium sulfide.

6. A method of producing a sulfide-based inorganic solid electrolyte material, including: a step of mechanically treating the raw material composition for the sulfide-based inorganic solid electrolyte material according to 5.

7. A sulfide-based inorganic solid electrolyte material which is obtained by using the phosphorus sulfide composition according to any one of 1. to 4. as a raw material.

8. A sulfide-based inorganic solid electrolyte including: the sulfide-based inorganic solid electrolyte material according to 7.

9. A sulfide-based inorganic solid electrolyte film including: the sulfide-based inorganic solid electrolyte according to 8. as a main component.

10. A lithium ion battery including: a positive electrode which includes a positive electrode active material layer; an electrolyte layer; and a negative electrode which includes a negative electrode active material layer, in which at least one of the positive electrode active material layer, the electrolyte layer, or the negative electrode active material layer contains the sulfide-based inorganic solid electrolyte material according to 7.

11. A method of producing a phosphorus sulfide composition for a sulfide-based inorganic solid electrolyte material, the method including: a step of selecting a phosphorus sulfide composition in which Reactivity measured by a following [Method 1] is greater than or equal to 5.0 °C/min.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.

Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.

A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.

A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.

The Reactivity is derived by Equation (1).

$$\text{Reactivity} = (Tm_{max} - Tm_0)/(T_{max} - T_0) \quad (1)$$

12. A quality control method for a phosphorus sulfide composition for a sulfide-based inorganic solid electrolyte material, the method including: a step of determining that a phosphorus sulfide composition in which Reactivity measured by a following [Method 1] is greater than or equal to 5.0 °C/min is acceptable.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.

Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.

A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.

A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.

The Reactivity is derived by Equation (1).

$$\text{Reactivity} = (Tm_{max} - Tm_0)/(T_{max} - T_0) \quad (1)$$

13. A method of producing a sulfide-based inorganic solid electrolyte material, including: a step of mixing a raw material composition containing lithium sulfide and the phosphorus sulfide composition according to any one of 1. to 4. to obtain a mixture; and a step of performing a mechanochemical treatment on the obtained mixture to obtain a mechanochemically treated product.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.

Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.

A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.

A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.

The Reactivity is derived by Equation (1).

$$\text{Reactivity} = (Tm_{max} - Tm_0)/(T_{max} - T_0) \quad (1)$$

14. The method of producing a sulfide-based inorganic solid electrolyte material according to 13., further including: a step of performing a heat treatment on the mechanochemically treated product at a temperature of higher than or equal to 180°C and lower than 450°C.

15. The method of producing a sulfide-based inorganic solid electrolyte material according to 13. or 14., in which the method does not include a step of heating the mechanochemically treated product at higher than or equal to 450°C.

16. The method of producing a sulfide-based inorganic solid electrolyte material according to any one of 13. to 15., in which a lithium ion conductivity of the sulfide-based inorganic solid electrolyte material, which is measured by a method described in <Measurement of lithium ion conductivity> below, is greater than or equal to $1.0 \times 10^{-3}$ S/cm.

<Measurement of lithium ion conductivity>

First, 110 mg of the sulfide-based inorganic solid electrolyte material is pressed under conditions of 270 MPa for 10 minutes to obtain a disk-like sample having a diameter of 9.5 mm and a thickness of 1 mm.

Next, a lithium ion conductivity of the obtained disk-like sample is measured by an alternating current impedance method using a Li foil as an electrode under conditions of an applied voltage of 10 mV, a measurement frequency range of 0.1 Hz to 3 MHz, and a measurement temperature of 27°C using an electrochemical measurement device.

17. The method of producing a sulfide-based inorganic solid electrolyte material according to any one of 13. to 16., in which an oxidative decomposition current value of the sulfide-based inorganic solid electrolyte material, which is measured by a method described in <Measurement of maximum value of oxidative decomposition current> below, is less than or equal to $0.10 \times 10^{-5}$ mA.

<Measurement of maximum value of oxidative decomposition current>

First, 150 mg of the sulfide-based inorganic solid electrolyte material is pressed under conditions of 270 MPa for 10 minutes to obtain a disk-like sample having a diameter of 9.5 mm and a thickness of 1.3 mm.

Next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface.

Next, a maximum value of an oxidative decomposition current of the obtained pellet is measured under conditions of a sweep voltage range of 0 to 10 V, a voltage sweep rate of 5 mV/sec, and a measurement temperature of 25°C using an electrochemical measurement device.

18. The method of producing a sulfide-based inorganic solid electrolyte material according to any one of 13. to 17., in which in an X-ray diffraction analysis spectrum of the sulfide-based inorganic solid electrolyte material, which is obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$.

<X-ray diffraction analysis>

Using an X-ray diffractometer, an X-ray diffraction analysis spectrum of the sulfide-based inorganic solid electrolyte material is obtained using CuKα rays as a radiation source under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.

19. The method of producing a sulfide-based inorganic solid electrolyte material according to any one of 13. to 18, in which the sulfide-based inorganic solid electrolyte material includes $Li_3PS_4$.

20. The method of producing a sulfide-based inorganic solid electrolyte material according to 19, in which the $Li_3PS_4$ is α-type $Li_3PS_4$.

21. A sulfide-based inorganic solid electrolyte material which is obtained by the method of producing a sulfide-based inorganic solid electrolyte material according to any one of 13. to 20.

22. A sulfide-based inorganic solid electrolyte including: the sulfide-based inorganic solid electrolyte material according to 21.

23. A sulfide-based inorganic solid electrolyte film including: the sulfide-based inorganic solid electrolyte according to 22. as a main component.

24. A lithium ion battery including: a positive electrode which includes a positive electrode active material layer; an electrolyte layer; and a negative electrode which includes a negative electrode active material layer, in which at least one of the positive electrode active material layer, the electrolyte layer, or the negative electrode active material layer contains the sulfide-based inorganic solid electrolyte material according to 21.

25. A sulfide-based inorganic solid electrolyte material including: Li, P, and S as constitutional elements, in which in an X-ray diffraction analysis spectrum of the sulfide-based inorganic solid electrolyte material, which is obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$.

<X-ray diffraction analysis>

Using an X-ray diffractometer, an X-ray diffraction analysis spectrum of the sulfide-based inorganic solid electrolyte material is obtained using CuK$\alpha$ rays as a radiation source and a glass sample plate as a sample holder under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.
26. The sulfide-based inorganic solid electrolyte material according to 25, further including: $Li_3PS_4$.
27. The sulfide-based inorganic solid electrolyte material according to 26, in which a content of $Li_3PS_4$ is greater than or equal to 95% by mass.
28. The sulfide-based inorganic solid electrolyte material according to any one of 25. to 27., in which a lithium ion conductivity of the sulfide-based inorganic solid electrolyte material, which is measured by a method described in <Measurement of lithium ion conductivity> below, is greater than or equal to $1.0 \times 10^{-3}$ S/cm.

<Measurement of lithium ion conductivity>

First, 110 mg of the sulfide-based inorganic solid electrolyte material is pressed under conditions of 270 MPa for 10 minutes to obtain a disk-like sample having a diameter of 9.5 mm and a thickness of 1 mm.
Next, a lithium ion conductivity of the obtained disk-like sample is measured by an alternating current impedance method using a Li foil as an electrode under conditions of an applied voltage of 10 mV, a measurement frequency range of 0.1 Hz to 3 MHz, and a measurement temperature of 27°C using an electrochemical measurement device.
29. The sulfide-based inorganic solid electrolyte material according to any one of 25. to 28., in which an oxidative decomposition current value of the sulfide-based inorganic solid electrolyte material, which is measured by a method described in <Measurement of maximum value of oxidative decomposition current> below, is less than or equal to $0.10 \times 10^{-5}$ mA.

<Measurement of maximum value of oxidative decomposition current>

First, 150 mg of the sulfide-based inorganic solid electrolyte material is pressed under conditions of 270 MPa for 10 minutes to obtain a disk-like sample having a diameter of 9.5 mm and a thickness of 1.3 mm.
Next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface.
Next, a maximum value of an oxidative decomposition current of the obtained pellet is measured under conditions of a sweep voltage range of 0 to 10 V, a voltage sweep rate of 5 mV/sec, and a measurement temperature of 25°C using an electrochemical measurement device.
30. A sulfide-based inorganic solid electrolyte including: the sulfide-based inorganic solid electrolyte material according to any one of 25 to 29.
31. A sulfide-based inorganic solid electrolyte film including: the sulfide-based inorganic solid electrolyte according to 30. as a main component.
32. A lithium ion battery including: a positive electrode which includes a positive electrode active material layer; an electrolyte layer; and a negative electrode which includes a negative electrode active material layer, in which at least one of the positive electrode active material layer, the electrolyte layer, or the negative electrode active material layer contains the sulfide-based inorganic solid electrolyte material according to any one of 25. to 29.

ADVANTAGEOUS EFFECTS OF INVENTION

According to the present invention, it is possible to provide a phosphorus sulfide composition which is capable of preparing a sulfide-based inorganic solid electrolyte material having improved lithium ion conductivity, a method of producing a sulfide-based inorganic solid electrolyte material, which enables preparation of a sulfide-based inorganic solid electrolyte material having improved lithium ion conductivity, and a sulfide-based inorganic solid electrolyte material having improved lithium ion conductivity.

BRIEF DESCRIPTION OF THE DRAWINGS

[FIG. 1] A cross-sectional view showing an example of a structure of a lithium ion battery of the present embodiment.
[FIG. 2] A view showing an X-ray diffraction analysis spectrum of the sulfide-based inorganic solid electrolyte material obtained in examples and comparative examples.
[FIG. 3] An enlarged view showing a range of 2θ = 10° to 35° of an X-ray diffraction analysis spectrum of the sulfide-based inorganic solid electrolyte materials obtained in examples and comparative examples.

DESCRIPTION OF EMBODIMENTS

Hereinafter, the present invention will be described based on embodiments.

1. First embodiment

Hereinafter, a first embodiment of the present invention will be described.

[Phosphorus sulfide composition for sulfide-based inorganic solid electrolyte material]

The reactivity of the phosphorus sulfide composition for a sulfide-based inorganic solid electrolyte material of the present embodiment, which is measured by the following [Method 1] is greater than or equal to 5.0 °C/min, preferably greater than or equal to 6.0 °C/min, more preferably greater than or equal to 6.5 °C/min, still more preferably greater than or equal to 6.8 °C/min, even still more preferably greater than or equal to 7.0 °C/min, even still more preferably greater than or equal to 7.5 °C/min, and even still more preferably greater than or equal to 8.0 °C/min. The upper limit of the above-described Reactivity is not particularly limited, but is, for example, less than or equal to 30.0 °C/min, and may be less than or equal to 15.0 °C/min, less than or equal to 10.0 °C/min, or less than or equal to 9.0 °C/min.

[Method 1]

First, the phosphorus sulfide composition is pulverized in an agate mortar in an argon atmosphere, and classified with a sieve having an opening of 500 μm, an undersieve is classified with a sieve having an opening of 250 μm, and greater than or equal to 10 g of an oversieve is collected. 9.20 g of the collected powder is weighed and used as test powder.
Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.
A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.
A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.
The Reactivity is derived by Equation (1).

$$\text{Reactivity} = (Tm_{max} - Tm_0)/(T_{max} - T_0) \quad (1)$$

As shown in Reaction Formula (1A), the Reactivity is an index indicating the amount of heat of generation generated in a case where an alcohol (ROH (R is any organic group)) and a diphosphorus pentasulfide ($P_2S_5$) react with each other to generate thiophosphoric acid (($RO)_2P(S)SH$).

$$4ROH + P_2S_5 \rightarrow 2 (RO)_2P(S)SH + H_2S \quad (1A)$$

The reactivity is an index that has been used to monitor the amount of heat generated in a case of industrially producing thiophosphoric acid used as a raw material for a pesticide or the like, to prevent excessive heat generation and to enable stable production. Therefore, in the field of the phosphorus sulfide composition for a sulfide-based inorganic solid electrolyte material, the index of Reactivity has not been paid attention to.
However, according to the examination of the present inventors, it has been found that a sulfide solid electrolyte material having improved lithium ion conductivity can be obtained by evaluating and selecting a phosphorus sulfide composition for a sulfide-based inorganic solid electrolyte material using Reactivity as an index, thereby completing the present invention.
In general, the value of Reactivity can be changed by controlling the cooling rate in a case of crystallizing diphosphorus pentasulfide.
The phosphorus sulfide composition of the present embodiment may contain various phosphorus sulfides such as $P_2S_5$, $P_4S_3$, and $P_4S_7$.

It is preferable that the phosphorus sulfide composition of the present embodiment contains $P_2S_5$.

The content of $P_2S_5$ in the phosphorus sulfide composition of the present embodiment is preferably greater than or equal to 95% by mass, more preferably greater than or equal to 97% by mass, and still more preferably greater than or equal to 99% by mass, and is, for example, less than or equal to 100% by mass.

The phosphorus sulfide composition of the present embodiment is preferably in the powder form. Since the sulfide-based inorganic solid electrolyte material described below is usually produced by a dry method, the sulfide-based inorganic solid electrolyte material is more easily produced in a case where the sulfide-based inorganic solid electrolyte material is in the powder form.

[Raw material composition for sulfide-based inorganic solid electrolyte material]

The raw material composition for the sulfide-based inorganic solid electrolyte material according to the present embodiment includes the above-described phosphorus sulfide composition according to the present embodiment and lithium sulfide.

For example, a sulfide-based inorganic solid electrolyte material can be obtained by performing a mechanical treatment such as a mechanochemical treatment on the above-described raw material composition.

The lithium sulfide in the raw material composition is not particularly limited, and a commercially available lithium sulfide may be used, or for example, lithium sulfide obtained by a reaction between lithium hydroxide and hydrogen sulfide may be used.

From the viewpoint of obtaining the high-purity sulfide-based inorganic solid electrolyte material and suppressing a side reaction, it is preferable that lithium sulfide having little impurities is used.

Here, in the present embodiment, examples of the lithium sulfide include lithium polysulfide.

The raw material composition may contain lithium nitride. Here, nitrogen in the lithium nitride is discharged into the system as $N_2$. Therefore, by using lithium nitride as a raw material, only the Li composition can be increased with respect to the sulfide-based inorganic solid electrolyte material including Li, P, and S as constitutional elements.

The lithium nitride according to the present embodiment is not particularly limited, and a commercially available lithium nitride (for example, $Li_3N$) may be used. For example, lithium nitride obtained by a reaction of metallic lithium (for example, Li foil) and nitrogen gas may also be used.

From the viewpoint of obtaining the high-purity solid electrolyte material and suppressing a side reaction, it is preferable that lithium nitride having little impurities is used.

Here, the ratio of each raw material in the raw material composition may be adjusted such that the sulfide-based inorganic solid electrolyte material has a desired compositional ratio.

[Method of producing sulfide-based inorganic solid electrolyte material]

The method of producing a sulfide-based inorganic solid electrolyte material according to the present embodiment includes a step of mechanically treating the raw material composition for the sulfide-based inorganic solid electrolyte material according to the present embodiment.

The method of producing a sulfide-based inorganic solid electrolyte material according to the present embodiment includes the following steps (A) and (B), and may further include a step (C) and a step (D). The step (D) may be carried out after the step (B) or after the step (C).

Step (A): a step of mixing a raw material composition for a sulfide-based inorganic solid electrolyte material containing lithium sulfide and the phosphorus sulfide composition of the first embodiment to obtain a mixture

Step (B): a step of performing a mechanical treatment (preferably, a mechanochemical treatment) on the obtained mixture to obtain a sulfide-based inorganic solid electrolyte material in a glassy state (for example, a mechanochemically treated product)

Step (C): a step of heating the obtained sulfide-based inorganic solid electrolyte material in a glassy state to crystallize at least a part thereof, thereby obtaining a sulfide-based inorganic solid electrolyte material in a glass-ceramic state

Step (D): a step of pulverizing, classifying, or granulating the obtained sulfide-based inorganic solid electrolyte material in a glassy or glass-ceramic state to obtain a sulfide-based inorganic solid electrolyte material

In the step (A), a raw material composition for a sulfide-based inorganic solid electrolyte material is mixed to obtain a mixture.

The mixing method in the step (A) is not particularly limited as long as the mixing method enables uniformly mixing of each of the raw materials, and the raw materials can be mixed by using, for example, a mortar, a ball mill, a bead mill, a vibration mill, an impact pulverizing device, a mixer (a pug mixer, a ribbon mixer, a tumbler mixer, a drum mixer, a V-type mixer, or the like), a kneader, a biaxial kneader, an air flow pulverizer, a crusher, or a rotary blade type pulverizer.

Mixing conditions such as a stirring rate, a treatment time, a temperature, a reaction pressure, or a gravitational acceleration applied to the mixture during the mixing of the respective raw materials can be appropriately determined depending on the treatment amount of the mixture.

In the step (B), the mixture is subjected to A mechanical treatment (preferably mechanochemical treatment) to obtain a sulfide-based inorganic solid electrolyte material in a glassy state.

Here, the mechanical treatment is a treatment of causing two or more kinds of inorganic compounds to mechanically collide with each other to vitrify the inorganic composition in a chemical reaction, and examples of such a mechanical treatment include a mechanochemical treatment.

Here, the mechanochemical treatment is a method of vitrifying a mixing target while applying a mechanical energy such as a shear force, an impact force, or a centrifugal force thereto. Examples of a device that performs the vitrification through the mechanochemical treatment include a pulverizer and a disperser such as a ball mill, a bead mill, a vibration mill, a turbo mill, a mechanofusion, or a disc mill; and an impact pulverizing device formed of a mechanism obtained by combining rotation, extrusion, and impact represented by a rock drill, a vibration drill, or an impact driver.

According to the mechanochemical treatment, since each of the raw materials can be mixed while being pulverized into fine particles, the contact area of each of the raw materials is increased. In this manner, the reaction of each of the raw materials can be promoted, and a sulfide-based inorganic solid electrolyte material can be more efficiently obtained.

From the viewpoint of easily realizing an environment where moisture and oxygen are removed at a high level, it is preferable that the mechanochemical treatment in the step (B) is a dry mechanochemical treatment.

Examples of the device that performs the mechanical treatment in the step (B) include a pulverizer and disperser such as a ball mill, a bead mill, a vibration mill, a turbo mill, a mechanofusion, a disc mill, or a roll mill; a rotation and impact pulverizing device consisting of a mechanism obtained by combining rotation (shear stress) and impact (compressive stress), which is represented by a rock drill, a vibration drill, or an impact driver; a high-pressure type grinding roll; and a vertical mill such as a roller type vertical mill or a ball type vertical mill.

Among these, from the viewpoint of efficiently generating extremely high impact energy, a ball mill and a bead mill are preferable, and a ball mill is more preferable.

In addition, from the viewpoint that continuous productivity is excellent, a roll mill; a rotation and impact pulverizing device formed of a mechanism obtained by combining rotation (shear stress) and impact (compressive stress) represented by a rock drill, a vibration drill, or an impact driver; a high-pressure type grinding roll; or a vertical mill such as a roller type vertical mill or a ball type vertical mill is preferable.

The mixing conditions such as the rotation speed, the treatment time, the temperature, the reaction pressure, and the gravitational acceleration applied to the raw material composition in the mechanical treatment of the step (B) can be appropriately determined depending on the kind and the treatment amount of the raw material composition. The generation speed of glass usually increases as the rotation speed of the device increases, and the conversion rate to glass increases as the treatment time increases.

Typically, when X-ray diffraction analysis is performed using CuK$\alpha$ rays as a radiation source, in a case where a diffraction peak derived from the raw material is lost or decreases, it can be determined that the raw material composition for the sulfide-based inorganic solid electrolyte material is vitrified and a desired sulfide-based inorganic solid electrolyte material is obtained.

It is preferable that the mechanical treatment in the step (B) is performed in an inert gas atmosphere. In this manner, deterioration (for example, oxidation) of the sulfide-based inorganic solid electrolyte material can be prevented.

Examples of the inert gas include argon gas, helium gas, and nitrogen gas. It is preferable that the inert gas has high purity in order to prevent impurities from being mixed into a product, and the dew point is preferably lower than or equal to -70°C and more preferably lower than or equal to -80°C in order to avoid contact with moisture.

In the step (C), the obtained sulfide-based inorganic solid electrolyte material in a glassy state is heated to crystallize at least a part thereof, thereby obtaining a sulfide-based inorganic solid electrolyte material in a glass-ceramic state. Here, the glass ceramic is a material in which at least a part of an inorganic compound is crystallized, and is also referred to as crystallized glass.

The lower limit of the heat treatment temperature in the step (C) is not particularly limited, but is preferably higher than or equal to 180°C, more preferably higher than or equal to 200°C, and still more preferably higher than or equal to 220°C, and the upper limit thereof is preferably lower than 450°C, more preferably lower than 400°C, and still more preferably lower than 350°C. In this manner, the lithium ion conductivity of the sulfide-based inorganic solid electrolyte material is further improved.

The upper limit of the heat treatment temperature in the step (C) is not particularly limited, but it is preferable that the heat treatment does not include a step of heating the material at higher than or equal to 450°C, more preferable that the heat treatment does not include a step of heating the material at higher than or equal to 400°C, and still more preferable that the heat treatment does not include a step of heating the material at higher than or equal to 350°C. In this manner, the lithium ion conductivity of the sulfide-based inorganic solid electrolyte material is further improved.

The heat treatment time in the step (C) is not particularly limited, but is preferably 0.5 hours or longer and 24 hours or shorter and more preferably 1 hour or longer and 3 hours or shorter. In this manner, the lithium ion conductivity of the sulfide-based inorganic solid electrolyte material is further improved.

In addition, the method of the heat treatment in the step (C) is not particularly limited, and examples thereof include a method using a heating furnace or a baking furnace.

In addition, it is preferable that the heat treatment in the step (C) is performed in an inert gas atmosphere. In this manner, deterioration (for example, oxidation) of the sulfide-based inorganic solid electrolyte material can be prevented.

In the step (D), the obtained sulfide-based inorganic solid electrolyte material in a glassy or glass-ceramic state is pulverized, classified, or granulated to obtain a sulfide-based inorganic solid electrolyte material. The step (D) may be performed between the step (B) and the step (C) or after the step (C).

A pulverization method is not particularly limited, and a known pulverization method such as a mixer, air flow pulverization, a mortar, a rotary mill, or a coffee mill can be used. In addition, a classification method is not particularly limited, and a known method such as sieving can be used.

From the viewpoint of avoiding contact with moisture in air, it is preferable that pulverization or classification is performed in an inert gas atmosphere or a vacuum atmosphere.

In order to obtain the sulfide-based inorganic solid electrolyte material according to the present embodiment, it is important to appropriately adjust each of the steps. Here, the method of producing the sulfide-based inorganic solid electrolyte material according to the present embodiment is not limited to the above-described method.

[Sulfide-Based Inorganic Solid Electrolyte Material]

The sulfide-based inorganic solid electrolyte material of the present embodiment is obtained by using the above-described phosphorus sulfide composition of the present embodiment as a raw material.

The lower limit of the lithium ion conductivity of the sulfide-based inorganic solid electrolyte material of the present embodiment, which is measured by a method described in <Measurement of lithium ion conductivity> below, is preferably greater than or equal to $1.0 \times 10^{-3}$ S/cm, more preferably greater than or equal to $1.1 \times 10^{-3}$ S/cm, and still more preferably greater than or equal to $1.2 \times 10^{-3}$ S/cm. In this manner, a lithium ion battery having more excellent input-output characteristics can be obtained.

The upper limit of the lithium ion conductivity of the sulfide-based inorganic solid electrolyte material of the present embodiment is not particularly limited, but is, for example, less than or equal to $1.0 \times 10^{-2}$ S/cm, and may be less than or equal to $5.0 \times 10^{-3}$ S/cm, less than or equal to $3.0 \times 10^{-3}$ S/cm, or less than or equal to $2.0 \times 10^{-3}$ S/cm.

<Measurement of lithium ion conductivity>

First, 110 mg of the sulfide-based inorganic solid electrolyte material is pressed under conditions of 270 MPa for 10 minutes to obtain a disk-like sample having a diameter of 9.5 mm and a thickness of 1 mm.

Next, a lithium ion conductivity of the obtained disk-like sample is measured by an alternating current impedance method using a Li foil as an electrode under conditions of an applied voltage of 10 mV, a measurement frequency range of 0.1 Hz to 3 MHz, and a measurement temperature of 27°C using an electrochemical device.

Further, the lithium ion conductivity can be measured with an electrochemical measuring device such as a potentiostat/galvanostat SP-300 (manufactured by Bio-Logic).

The upper limit of the maximum value of the oxidative decomposition current of the sulfide-based inorganic solid electrolyte material of the present embodiment, which is measured by a method described in <Measurement of maximum value of oxidative decomposition current> below, is preferably less than or equal to $0.5 \times 10^{-5}$ mA, preferably less than or equal to $0.2 \times 10^{-5}$ mA, more preferably less than or equal to $0.1 \times 10^{-5}$ mA, still more preferably less than or equal to $0.09 \times 10^{-5}$ mA, and even still more preferably less than or equal to $0.08 \times 10^{-5}$ mA. In this manner, the oxidative decomposition of the sulfide-based inorganic solid electrolyte material in the lithium ion battery can be further suppressed.

The lower limit of the maximum value of the oxidative decomposition current of the sulfide-based inorganic solid electrolyte material of the present embodiment is not particularly limited, but is, for example, greater than or equal to $0.001 \times 10^{-5}$ mA.

<Measurement of maximum value of oxidative decomposition current>

First, 150 mg of the sulfide-based inorganic solid electrolyte material is pressed under conditions of 270 MPa for 10 minutes to obtain a disk-like sample having a diameter of 9.5 mm and a thickness of 1.3 mm.

Next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface.

Next, a maximum value of an oxidative decomposition current of the obtained pellet is measured under conditions of a sweep voltage range of 0 to 10 V, a voltage sweep rate of 5 mV/sec, and a measurement temperature of 25°C using an electrochemical device.

Further, the maximum value of the oxidative decomposition current can be measured with an electrochemical measuring device such as a potentiostat/galvanostat SP-300 (manufactured by Bio-Logic).

In the X-ray diffraction analysis spectrum of the sulfide-based inorganic solid electrolyte material according to the present embodiment obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$.

<X-ray diffraction analysis>

An X-ray diffraction analysis spectrum of the sulfide-based inorganic solid electrolyte material is obtained using $CuK\alpha$ rays as a radiation source under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.

Further, the X-ray diffraction analysis can be performed using an X-ray diffractometer such as RINT2000 (manufactured by Rigaku Corporation).

The X-ray diffraction analysis spectrum of the sulfide-based inorganic solid electrolyte material of the present embodiment, which is obtained by the method described in <X-ray diffraction analysis> above, is similar to the X-ray diffraction analysis spectrum of the $\alpha$ phase $Li_3PS_4$.

Specifically, the X-ray diffraction analysis spectrum of the sulfide-based inorganic solid electrolyte material of the present embodiment, which is obtained by the method described in <X-ray diffraction analysis> above, satisfies the following requirements 1 to 3. Further, according to K. Homma, M. Yonemura, M. Nagao, M. Hirayama, R. Kanno, J. Phys. Soc. Jpn., 79, 90-93 (2010), it is found that these requirements also apply to the $\alpha$ phase $Li_3PS_4$.

Requirement 1: A peak is present in a range of $2\theta = 17.90 \pm 0.20°$.

Requirement 2: A peak is present in a range of $2\theta = 29.00 \pm 0.50°$.

Requirement 3: A peak is present in a range of $2\theta = 29.75 \pm 0.25°$.

As a result of the examination conducted by the present inventors, it has been newly found that in a case where the X-ray diffraction analysis spectrum of the sulfide-based inorganic solid electrolyte material has the above-described characteristics, the lithium ion conductivity of the sulfide-based inorganic solid electrolyte material is improved.

In the X-ray diffraction analysis spectrum of the sulfide-based inorganic solid electrolyte material of the present embodiment, which is obtained by the method described in <X-ray diffraction analysis> above, it is preferable that a peak is present in a range of $2\theta = 20.00° \pm 0.20°$.

In the X-ray diffraction analysis spectrum of the sulfide-based inorganic solid electrolyte material of the present embodiment, which is obtained by the method described in <X-ray diffraction analysis> above, it is preferable that a peak is present in a range of $2\theta = 25.90° \pm 0.20°$.

In the X-ray diffraction analysis spectrum of the sulfide-based inorganic solid electrolyte material of the present embodiment, which is obtained by the method described in <X-ray diffraction analysis> above, it is preferable that a peak present in a range of $2\theta = 17.90 \pm 0.20°$ is not bifurcated.

It is preferable that the sulfide-based inorganic solid electrolyte material of the present embodiment contains Li, P, and S as constitutional elements.

The molar ratio (Li/P) of Li to P in the sulfide-based inorganic solid electrolyte material of the present embodiment is preferably greater than or equal to 1.0 and less than or equal to 5.0, more preferably greater than or equal to 2.0 and less than or equal to 4.0, still more preferably greater than or equal to 2.5 and less than or equal to 3.8, even still more preferably greater than or equal to 2.8 and less than or equal to 3.6, even still more preferably greater than or equal to 3.0 and less than or equal to 3.5, even still more preferably greater than or equal to 3.1 and less than or equal to 3.4, and even still more preferably greater than or equal to 3.1 and less than or equal to 3.3.

The molar ratio (S/P) of S to P in the sulfide-based inorganic solid electrolyte material of the present embodiment is preferably greater than or equal to 2.0 and less than or equal to 6.0, more preferably greater than or equal to 3.0 and less than or equal to 5.0, still more preferably greater than or equal to 3.5 and less than or equal to 4.5, even still more preferably greater than or equal to 3.8 and less than or equal to 4.2, and even still more preferably greater than or equal to 3.9 and less than or equal to 4.1.

Here, the molar ratio (Li/P) of Li to P and the molar ratio (S/P) of S to P can be determined by, for example, ICP emission spectrometry or X-ray analysis.

It is preferable that the sulfide-based inorganic solid electrolyte material of the present embodiment includes $Li_3PS_4$.

The sulfide-based inorganic solid electrolyte material of the present embodiment preferably includes $\alpha$ type

$Li_3PS_4$. The $\alpha$-type $Li_3PS_4$ can be identified by, for example, X-ray diffraction analysis.

In a case where the sulfide-based inorganic solid electrolyte material of the present embodiment has a particle shape, the particle diameter thereof is not particularly limited, but the lower limit of $D_{50}$ in the volume-based particle size distribution according to the laser diffraction scattering particle size distribution measurement method is preferably greater than or equal to 0.1 $\mu$m, more preferably greater than or equal to 0.3 $\mu$m, and still more preferably greater than or equal to 0.5 $\mu$m. In this manner, the handleability of the sulfide-based inorganic solid electrolyte material is further improved.

In addition, the upper limit of $D_{50}$ is preferably less than or equal to 150 $\mu$m, more preferably less than or equal to 120 $\mu$m, and still more preferably less than or equal to 100 $\mu$m. In this manner, the lithium ion conductivity is further improved.

The sulfide-based inorganic solid electrolyte material according to the present embodiment can be used for any application where lithium ion conductivity is required. Among these, the sulfide-based inorganic solid electrolyte material can be suitably used for a lithium ion battery, particularly an all-solid state lithium ion battery.

[Sulfide-based inorganic solid electrolyte]

The sulfide-based inorganic solid electrolyte according to the present embodiment includes the sulfide-based inorganic solid electrolyte material according to the present embodiment described above.

The sulfide-based inorganic solid electrolyte of the present embodiment may include, for example, a solid electrolyte material of a different kind from the sulfide-based inorganic solid electrolyte material of the present embodiment described above, as a component other than the sulfide-based inorganic solid electrolyte material of the present embodiment described above, within a range where the object of the present invention is not impaired.

Examples of the solid electrolyte material of a different kind from the sulfide-based inorganic solid electrolyte material of the present embodiment include inorganic solid electrolyte materials such as a sulfide-based inorganic solid electrolyte material of a different kind from the sulfide-based inorganic solid electrolyte material of the present embodiment, an oxide-based inorganic solid electrolyte materials, and other lithium-based inorganic solid electrolyte materials; and organic solid electrolyte materials such as a polymer electrolyte.

Examples of the sulfide-based inorganic solid electrolyte material of a different kind from the sulfide-based inorganic solid electrolyte material according to the present embodiment include a $Li_2S$-$P_2S_5$ material, a $Li_2S$-$SiS_2$ material, a $Li_2S$-$GeS_2$ material, a $Li_2S$-$Al_2S_3$ material, a $Li_2S$-$SiS_2$-$Li_3PO_4$ material, a $Li_2S$-$P_2S_5$-$GeS_2$ material, a $Li_2S$-$Li_2O$-$P_2S_5$-$SiS_2$ material, a $Li_2S$-$GeS_2$-$P_2S_5$-$SiS_2$ material, a $Li_2S$-$SnS_2$-$P_2S_5$-$SiS_2$ material, a $Li_2S$-$P_2S_5$-$Li_3N$ material, a $Li_2S_{2+X}$-$P_4S_3$ material, and a $Li_2S$-$P_2S_5$-$P_4S_3$ material.

Here, for example, the $Li_2S$-$P_2S_5$ material denotes a solid electrolyte material obtained by a chemical reaction of an inorganic composition containing at least $Li_2S$ (lithium sulfide) and $P_2S_5$, which is caused by a mechanical treatment on the inorganic composition.

Here, the lithium sulfide also includes lithium polysulfide.

Examples of the above-described oxide-based inorganic solid electrolyte material include a NASICON type material such as $LiTi_2(PO_4)_3$, $LiZr_2(PO_4)_3$, or $LiGe_2(PO_4)_3$; a perovskite type material such as $(La_{0.5+x}Li_{0.5-3x})TiO_3$; a $Li_2O$-$P_2O_5$ material; and a $Li_2O$-$P_2O_5$-$Li_3N$ material.

Examples of the other lithium-based inorganic solid electrolyte materials include LiPON, $LiNbO_3$, $LiTaO_3$, $Li_3PO_4$, $LiPO_{4-x}N_x$ (x satisfies $0 < x \le 1$), LiN, LiI, and LISICON.

Further, glass ceramics obtained by precipitating crystal of the inorganic solid electrolytes can also be used as the inorganic solid electrolyte material.

Examples of the organic solid electrolyte material include a polymer electrolyte such as a dry polymer electrolyte and a gel electrolyte.

[Sulfide-based inorganic solid electrolyte film]

The sulfide-based inorganic solid electrolyte film according to the present embodiment contains the solid electrolyte according to the present embodiment as a main component.

The sulfide-based inorganic solid electrolyte film according to the present embodiment is used, for example, in a solid electrolyte layer constituting an all-solid state lithium ion battery. Examples of the all-solid state lithium ion battery to which the solid electrolyte film according to the present embodiment is applied include an all-solid state lithium ion battery in which a positive electrode, a solid electrolyte layer, and a negative electrode are laminated in this order. In this case, the solid electrolyte layer is formed of the solid electrolyte film.

The average thickness of the sulfide-based inorganic solid electrolyte film of the present embodiment is preferably greater than or equal to 5 $\mu$m, more preferably greater than or equal to 10 $\mu$m, and still more preferably greater than or equal to 20 $\mu$m. In this manner, the omission of the solid electrolyte or the occurrence of cracks on the surface of the solid electrolyte film can be further suppressed.

The average thickness of the sulfide-based inorganic solid electrolyte film of the present embodiment is preferably less than or equal to 500 $\mu$m, more preferably less than or equal to 200 $\mu$m, and still more preferably less than or equal to 100 $\mu$m. In this manner, the impedance of the solid electrolyte film can be further reduced, and as a result, the battery characteristics of the all-solid state lithium ion battery to be obtained are further improved.

It is preferable that the sulfide-based inorganic solid electrolyte film according to the present embodiment is a pressure-molded article of a particle-shaped solid electrolyte. That is, it is preferable that the particle-shaped solid electrolyte is pressured to obtain a solid electrolyte film having a certain strength due to the anchor effect between the solid electrolyte materials. In this manner, the omission of the solid electrolyte or the occurrence of cracks on the surface of the solid electrolyte film can be further suppressed.

The lower limit of the content of the sulfide-based inorganic solid electrolyte material of the present embodiment in the sulfide-based inorganic solid electrolyte film of the present embodiment is preferably greater than or equal to 50% by mass, more preferably greater than or equal to 60% by mass, still more preferably greater than or equal to 70% by mass, even still more preferably greater than or equal to 80% by mass, and even still more preferably greater than or equal to 90% by mass.

In this manner, contact properties between the solid electrolytes are improved, the interface contact resistance of the solid electrolyte film can be reduced, and as a result, the lithium ion conductivity of the solid electrolyte film is further improved. In addition, the battery characteristics of the all-solid state lithium ion battery are further improved by using such a solid electrolyte film in which the lithium ion conductivity is improved.

The upper limit of the content of the sulfide-based inorganic solid electrolyte material of the present embodiment in the sulfide-based inorganic solid electrolyte film of the present embodiment is not particularly limited, but is, for example, less than or equal to 100% by mass.

The planar shape of the sulfide-based inorganic solid electrolyte film according to the present embodiment is not particularly limited and can be appropriately selected according to the shape of the electrode or the current collector, but can be set to, for example, a rectangle.

The sulfide-based inorganic solid electrolyte film according to the present embodiment may contain a binder resin, and the content of the binder resin is preferably less than 0.5% by mass, more preferably less than or equal to 0.1% by mass, still more preferably less than or equal to 0.05% by mass, and even still more preferably less than or equal to 0.01% by mass. Further, it is more suitable that the solid electrolyte film according to the present embodiment does not substantially contain a binder resin.

In this manner, contact properties between the solid electrolytes are improved, the interface contact resistance of the solid electrolyte film can be reduced, and as a result, the lithium ion conductivity of the solid electrolyte film is further improved. In addition, the battery characteristics of the all-solid state lithium ion battery are further improved by using such a solid electrolyte film in which the lithium ion conductivity is improved.

The expression "does not substantially contain a binder resin" denotes that the solid electrolyte film may contain a binder resin to the extent that the effects of the present embodiment are not impaired. In addition, when an adhesive resin layer is provided between the solid electrolyte layer and the positive electrode or the negative electrode, an adhesive resin derived from the adhesive resin layer present in the vicinity of an interface between the solid electrolyte layer and the adhesive resin layer is excluded from "binder resin in the solid electrolyte film".

In order to bind the inorganic solid electrolyte materials to each other, the binder resin refers to a binder that is usually used for a lithium ion battery, and examples of the binder resin include polyvinyl alcohol, polyacrylic acid, carboxymethyl cellulose, polytetrafluoroethylene, polyvinylidene fluoride, styrene-butadiene rubber, and polyimide.

The sulfide-based inorganic solid electrolyte film according to the present embodiment can be obtained, for example, by depositing the particle-shaped solid electrolyte on a cavity surface of a mold or a base material surface in a film shape and subsequently pressurizing the solid electrolyte deposited in a film shape.

A method of pressurizing the solid electrolyte is not particularly limited. For example, when the particle-shaped solid electrolyte is deposited on a cavity surface of a mold, pressing by a mold and a stamp can be used. When the particle-shaped solid electrolyte is deposited on a base material surface, pressing, roll pressing, or flat pressing by a mold and a stamp can be used.

The pressure at which the solid electrolyte is pressurized is, for example, greater than or equal to 10 MPa and less than or equal to 500 MPa.

In addition, the inorganic solid electrolyte deposited in a film shape may be pressurized and heated as necessary. In a case where the inorganic solid electrolyte are heated and pressurized, the solid electrolytes are fused and bound to each other, and the strength of the solid electrolyte film to be obtained is further increased, and as a result, the omission of the solid electrolyte and the occurrence of cracks on the surface of the solid electrolyte film can be further suppressed.

The temperature at which the solid electrolyte is heated is, for example, higher than or equal to 40°C and lower than or equal to 500°C.

[Lithium ion battery]

The lithium ion battery of the present embodiment is a lithium ion battery including a positive electrode that includes a positive electrode active material layer, an electrolyte layer, and a negative electrode that includes a negative electrode active material layer, in which at least one of the positive electrode active material layer, the electrolyte layer, or the negative electrode active material layer contains the sulfide-based inorganic solid electrolyte material of the present embodiment.

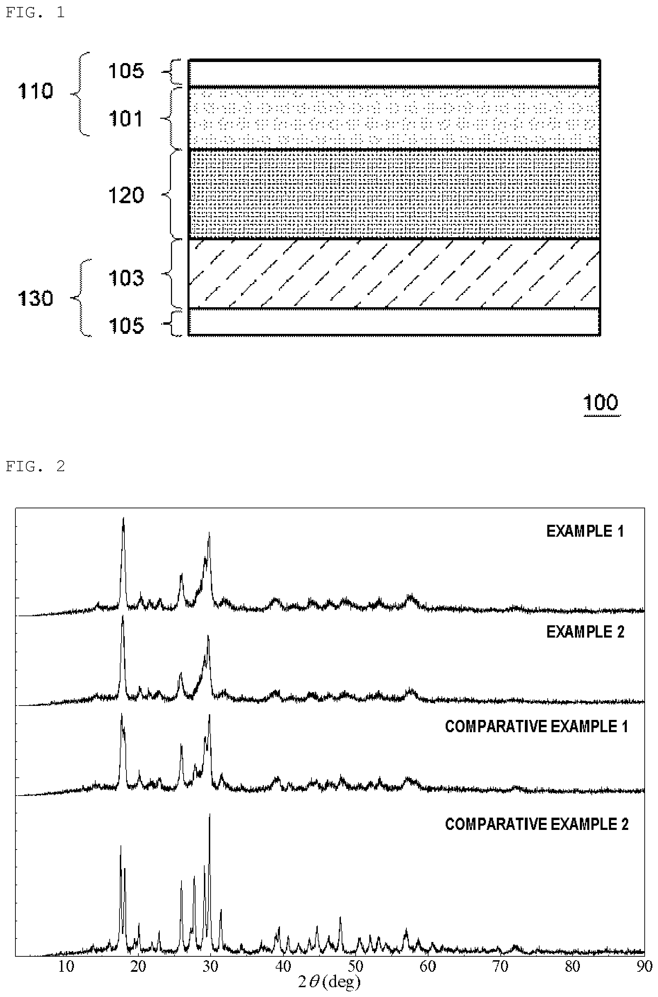

FIG. 1 is a cross-sectional view showing an example of the structure of the lithium ion battery of the present embodiment.

A lithium ion battery 100 according to the present embodiment includes a positive electrode 110 that includes a positive electrode active material layer 101, an electrolyte layer 120, and a negative electrode 130 that includes a negative electrode active material layer 103.

Further, at least one of the positive electrode active material layer 101, the negative electrode active material layer 103, or the electrolyte layer 120 contains the sulfide-based inorganic solid electrolyte material according to the present embodiment. In addition, it is preferable that all the positive electrode active material layer 101, the negative electrode active material layer 103, and the electrolyte layer 120 contain the sulfide-based inorganic solid electrolyte material according to the present embodiment.

In the present embodiment, a layer containing a positive electrode active material will be referred to as the positive electrode active material layer 101 unless specified otherwise. The positive electrode 110 may or may not further include a current collector 105 as necessary in addition to the positive electrode active material layer 101. In addition, in the present embodiment, a layer containing a negative electrode active material will be referred to as the negative electrode active material layer 103 unless specified otherwise. The negative electrode 130 may or may not further include the current collector 105 as necessary in addition to the negative electrode active material layer 103.

The shape of the lithium ion battery 100 according to the present embodiment is not particularly limited, and examples thereof include a cylindrical shape, a coin shape, a square shape, a film shape, and other optional shapes.

The lithium ion battery 100 of the present embodiment is produced by a generally known method. For example, the lithium ion battery 100 is prepared by forming a laminate including the positive electrode 110, the electrolyte layer 120, and the negative electrode 130 in a cylindrical shape, a coin shape, a square shape, a film shape, or any other shape and optionally filling the laminate with a non-aqueous electrolytic solution.

<Positive electrode>

The positive electrode 110 is not particularly limited, and a positive electrode that is generally used for a lithium ion battery can be used. The positive electrode 110 is not particularly limited and can be produced using a generally known method. For example, the positive electrode 110 can be obtained by forming the positive electrode active material layer 101 including the positive electrode active material on a surface of the current collector 105 such as aluminum foil.

The thickness or density of the positive electrode active material layer 101 is appropriately determined depending on the intended use of the battery and, thus can be set based on generally known information without any particular limitation.

The positive electrode active material layer 101 includes the positive electrode active material.

The positive electrode active material is not particularly limited, and a generally known material can be used. For example, a composite oxide such as a lithium cobalt oxide ($LiCoO_2$), a lithium nickel oxide ($LiNiO_2$), a lithium manganese oxide ($LiMn_2O_4$), a solid solution oxide ($Li_2MnO_3$-$LiMO_2$ (M=Co, Ni, or the like)), lithium-manganese- nickel oxide ($LiNi_{1/3}Mn_{1/3}Co_{1/3}O_2$), or an olivine-type lithium phosphate ($LiFePO_4$); a conductive polymer such as polyaniline or polypyrrole; a sulfide-based positive electrode active material such as $Li_2S$, CuS, a Li-Cu-S compound, $TiS_2$, FeS, $MoS_2$, a Li-Mo-S compound, a Li-Ti-S compound, a Li-V-S compound, or a Li-Fe-S compound; or a material including sulfur as an active material such as acetylene black impregnated with sulfur, porous carbon impregnated with sulfur, or mixed powder including sulfur and carbon can be used.

Among these, from the viewpoints of obtaining higher discharge capacity density and obtaining higher cycle characteristics, a sulfide-based positive electrode active material is preferable, and one kind or two or more kinds selected from a Li-Mo-S compound, a Li-Ti-S compound, and a Li-V-S compound are more preferable.

Here, the Li-Mo-S compound includes Li, Mo, and S as constitutional elements and can be typically obtained by a chemical reaction caused by mechanically treating an inorganic composition including molybdenum sulfide and lithium sulfide as raw materials.

In addition, the Li-Ti-S compound includes Li, Ti, and S as constitutional elements and can be typically obtained by a chemical reaction caused by mechanically treating an inorganic composition including titanium sulfide and lithium sulfide as raw materials.

The Li-V-S compound includes Li, V, and S as constitutional elements and can be typically obtained by a chemical reaction caused by mechanically treating an inorganic composition including vanadium sulfide and lithium sulfide as raw materials.

The positive electrode active material layer 101 is not particularly limited and may include, as components other than the positive electrode active material, for example, one or more materials selected from a binder resin, a thickener, a conductive auxiliary agent, a solid electrolyte material, and the like. Hereinafter, the respective materials will be described.

The positive electrode active material layer 101 may include a binder resin having a function of binding the positive electrode active materials to each other and binding the positive electrode active material and the current collector 105 to each other.

The binder resin according to the present embodiment is not particularly limited as long as it is a typical binder resin that can be used for a lithium ion battery. Examples of the binder resin include polyvinyl alcohol, polyacrylic acid, carboxymethyl cellulose, polytetrafluoroethylene, polyvinylidene fluoride, styrene-butadiene rubber, and polyimide.

From the viewpoint of securing the fluidity of a slurry suitable for application, the positive electrode active material layer 101 may include a thickener. The thickener is not particularly limited as long as it is a typical thickener that can be used for a lithium ion battery. Examples of the thickener include a cellulose-based polymer such as carboxymethyl cellulose, methyl cellulose, or hydroxypropyl cellulose and an ammonium salt and an alkali metal salt thereof; and a water-soluble polymer such as polycarboxylic acid, polyethylene oxide, polyvinyl pyrrolidone, polyacrylate, or polyvinyl alcohol.

From the viewpoint of improving the conductivity of the positive electrode 110 the positive electrode active material layer 101 may include a conductive auxiliary agent. The conductive auxiliary agent is not particularly limited as long as it is a typical conductive auxiliary agent that can be used for a lithium ion battery. Examples of the conductive auxiliary agent include a carbon black such as Acetylene black or Ketjen black and a carbon material such as a vapor-grown carbon fiber.

The positive electrode of the lithium ion battery according to the present embodiment may contain a solid electrolyte containing the sulfide-based inorganic solid electrolyte material according to the present embodiment, or may contain a solid electrolyte containing a solid electrolyte material of a different kind from the sulfide-based inorganic solid electrolyte material according to the present embodiment.

The solid electrolyte material of a different kind from the sulfide-based inorganic solid electrolyte material according to the present embodiment is not particularly limited as long as the solid electrolyte material has ion conductivity and insulating properties, and a solid electrolyte material that is used for a lithium ion battery can be usually used. Examples of the solid electrolyte material include inorganic solid electrolyte materials such as a sulfide-based inorganic solid electrolyte material of a different kind from the sulfide-based inorganic solid electrolyte material according to the present embodiment, an oxide-based inorganic solid electrolyte material, and other lithium-based inorganic solid electrolyte materials; and organic solid electrolyte materials such as a polymer electrolyte. More specifically, the inorganic solid electrolyte material described in the description of the solid electrolyte according to the present embodiment can be used.

The mixing ratio between various materials in the positive electrode active material layer 101 is appropriately determined depending on the intended use of the battery and, thus can be set based on generally known information without any particular limitation.

<Negative electrode>

The negative electrode 130 is not particularly limited, and a negative electrode that is generally used for a lithium ion battery can be used. The negative electrode 130 is not particularly limited and can be produced using a generally known method. For example, the negative electrode 130 can be obtained by forming the negative electrode active material layer 103 including the negative electrode active material on a surface of the current collector 105 such as copper.

The thickness or density of the negative electrode active material layer 103 is appropriately determined depending on the intended use of the battery and, thus can be set based on generally known information without any particular limitation.

The negative electrode active material layer 103 includes the negative electrode active material.

The negative electrode active material is not particularly limited as long as the material is a typical negative electrode active material that can be used for a negative electrode of a lithium ion battery. Examples of the negative electrode active material include a carbon material such as natural graphite, artificial graphite, resinous coal, carbon fiber, activated charcoal, hard carbon, or soft carbon; a metal-based material mainly formed of lithium, a lithium alloy, tin, a tin alloy, silicon, a silicon alloy, gallium, a gallium alloy, indium, an indium alloy, aluminum, or an aluminum alloy; a conductive polymer such as polyacene, polyacetylene, or polypyrrole; and a lithium titanium composite oxide (for example, $Li_4Ti_5O_{12}$).

The negative electrode active material layer 103 is not particularly limited and may include, as components other than the negative electrode active material, for example, one or more materials selected from a binder resin, a thickener, a conductive auxiliary agent, a solid electrolyte material, and the like. These materials are not particularly limited, and examples thereof are the same as those of the materials used for the positive electrode 110.

The mixing ratio between various materials in the negative electrode active material layer 103 is appropriately determined depending on the intended use of the battery and, thus can be set based on generally known information without any particular limitation.

The negative electrode of the lithium ion battery according to the present embodiment may contain a solid electrolyte containing the sulfide-based inorganic solid electrolyte material according to the present embodiment, or may contain a solid electrolyte containing a solid electrolyte material of a different kind from the sulfide-based inorganic solid electrolyte material according to the present embodiment.

The solid electrolyte material of a different kind from the sulfide-based inorganic solid electrolyte material according to the present embodiment is not particularly limited as long as the solid electrolyte material has ion conductivity and insulating properties, and a solid electrolyte material that is used for a lithium ion battery can be usually used. Examples of the solid electrolyte material include inorganic solid electrolyte materials such as a sulfide-based inorganic solid electrolyte material of a different kind from the sulfide-based inorganic solid electrolyte material according to the present embodiment, an oxide-based inorganic solid electrolyte material, and other lithium-based inorganic solid electrolyte materials; and organic solid electrolyte materials such as a polymer electrolyte. More specifically, the inorganic solid electrolyte material described in the description of the solid electrolyte according to the present embodiment can be used.

<Electrolyte layer>

Next, the electrolyte layer 120 will be described. The electrolyte layer 120 is a layer formed between the positive electrode active material layer 101 and the negative electrode active material layer 103.

Examples of the electrolyte layer 120 include a separator impregnated with a non-aqueous electrolytic solution and a solid electrolyte layer including a solid electrolyte.

The separator according to the present embodiment is not particularly limited as long as it has a function of electrically insulating the positive electrode 110 and the negative electrode 130 to allow transmission of lithium ions. For example, a porous film can be used.

As the porous film, a microporous polymer film is suitably used, and examples of a material thereof include polyolefin, polyimide, polyvinylidene fluoride, and polyester. In particular, a porous polyolefin film is preferable, and specific examples thereof include a porous polyethylene film and a porous polypropylene film.

The non-aqueous electrolytic solution is obtained by dissolving an electrolyte in a solvent.

As the electrolyte, any known lithium salt can be used, and the electrolyte may be selected depending on the kind of the active material. Examples of the electrolyte include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, LiCl, LiBr, $LiB(C_2H_5)_4$, $CF_3SO_3Li$, $CH_3SO_3Li$, $LiCF_3SO_3$, $LiC_4F_9SO_3$, $Li(CF_3SO_2)_2N$, and a lithium lower aliphatic carboxylate.

The solvent in which the electrolyte is dissolved is not particularly limited as long as it is typically used as a liquid in which the electrolyte is dissolved. Examples of the solvent include: a carbonate such as ethylene carbonate (EC), propylene carbonate (PC), butylene carbonate (BC), dimethyl carbonate (DMC), diethyl carbonate (DEC), methyl ethyl carbonate (MEC), or vinylene carbonate (VC); a lactone such as γ-butyrolactone or γ-valerolactone; an ether such as trimethoxy methane, 1,2-dimethoxyethane, diethyl ether, 2-ethoxy ethane, tetrahydrofuran, or 2-methyl tetrahydrofuran; a sulfoxide such as dimethyl sulfoxide; an oxolane such as 1,3-dioxolane or 4-methyl-1,3-dioxolane; a nitrogen-containing solvent such as acetonitrile, nitromethane, formamide, or dimethylformamide; an organic acid ester such as methyl formate, methyl acetate, ethyl acetate, butyl acetate, methyl propionate, or ethyl propionate; a phosphate triester or a diglyme; a triglyme; a sulfolane such as sulfolane or methyl sulfolane; an oxazolidinone such as 3-methyl-2-oxazolidinone; and a sultone such as 1,3-propanesultone, 1,4-butanesultone, or naphthasultone.

The solid electrolyte layer of the lithium ion battery according to the present embodiment is a layer formed between the positive electrode active material layer 101 and the negative electrode active material layer 103, and is a layer formed of a solid electrolyte containing a solid electrolyte material.

The content of the solid electrolyte contained in the solid electrolyte layer of the lithium ion battery according to the present embodiment is not particularly limited as long as the ratio is set such that desired insulating properties can be obtained, but is preferably greater than or equal to 10% by volume and less than or equal to 100% by volume, preferably greater than or equal to 50% by volume and less than or equal to 100% by volume, preferably greater than or equal to 70% by volume and less than or equal to 100% by volume, and preferably greater than or equal to 90% by volume and less than or equal to 100% by volume, and it is more preferable that the solid electrolyte layer does not substantially contain components other than the solid electrolyte.

The expression "does not substantially contain components other than the solid electrolyte" denotes that the solid electrolyte layer may contain components other than the solid electrolyte to the extent that the effects of the present embodiment are not impaired.

The solid electrolyte contained in the solid electrolyte layer of the lithium ion battery according to the present embodiment is not particularly limited as long as the solid electrolyte has lithium ion conductivity, but the solid electrolyte according to the present embodiment described above is preferable.

The content of the solid electrolyte according to the present embodiment, which is contained in the solid electrolyte layer of the lithium ion battery according to the present embodiment, is not particularly limited as long as the ratio is set such that desired insulating properties can be obtained, but is preferably greater than or equal to 10% by volume and less than or equal to 100% by volume, more preferably greater than or equal to 50% by volume and less than or equal to 100% by volume, still more preferably greater than or equal to 70% by volume and less than or equal to 100% by volume, and even still more preferably greater than or equal to 90% by volume and less than or equal to 100% by volume, and it is particularly preferable that the solid electrolyte layer does not substantially contain components other than the solid electrolyte according to the present embodiment.

The expression "does not substantially contain components other than the solid electrolyte of the present embodiment" denotes that the solid electrolyte layer may contain components other than the solid electrolyte of the present embodiment to the extent that the effects of the present embodiment are not impaired.

The solid electrolyte layer of the lithium ion battery according to the present embodiment may contain a binder resin. By including the binder resin, a flexible solid electrolyte layer can be obtained. Examples of the binder resin include a fluorine-containing binder such as polytetrafluoroethylene or polyvinylidene fluoride.

The thickness of the solid electrolyte layer of the lithium ion battery according to the present embodiment is preferably greater than or equal to 0.1 $\mu$m and less than or equal to 1000 $\mu$m and more preferably greater than or equal to 0.1 $\mu$m and less than or equal to 300 $\mu$m.

[Method of producing phosphorus sulfide composition for sulfide-based inorganic solid electrolyte material]

The method of producing a phosphorus sulfide composition for a sulfide-based inorganic solid electrolyte material according to the present embodiment includes a step of selecting a phosphorus sulfide composition having a Reactivity of greater than or equal to 5.0 °C/min, which is measured by the following [Method 1].

The lower limit of the above-described Reactivity is preferably greater than or equal to 6.0 °C/min, more preferably greater than or equal to 6.5 °C/min, still more preferably greater than or equal to 6.8 °C/min, even still more preferably greater than or equal to 7.0 °C/min, even still more preferably greater than or equal to 7.5 °C/min, and even still more preferably greater than or equal to 8.0 °C/min. The upper limit of the above-described Reactivity is not particularly limited, but is, for example, less than or equal to 30.0 °C/min, and may be less than or equal to 15.0 °C/min, less than or equal to 10.0 °C/min, or less than or equal to 9.0 °C/min.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.

Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.

A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.

A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.

The Reactivity is derived by Equation (1).

$$\mathtt{Reactivity ~=~ (Tm_{max} ~-~ Tm_0)/(T_{max} ~-~ T_0) ~~(1)}$$

[Quality control method for phosphorus sulfide composition for sulfide-based inorganic solid electrolyte material]

A quality control method for the phosphorus sulfide composition for a sulfide-based inorganic solid electrolyte material according to the present embodiment includes a step of determining that a phosphorus sulfide composition in which the Reactivity measured by the following [Method 1] is greater than or equal to 5.0 °C/min is acceptable.

The lower limit of the above-described Reactivity is preferably greater than or equal to 6.0 °C/min, more preferably greater than or equal to 6.5 °C/min, still more preferably greater than or equal to 6.8 °C/min, even still more preferably greater than or equal to 7.0 °C/min, even still more preferably greater than or equal to 7.5 °C/min, and even still more preferably greater than or equal to 8.0 °C/min. The upper limit of the above-described Reactivity is not particularly limited, but is, for example, less than or equal to 30.0 °C/min, and may be less than or equal to 15.0 °C/min, less than or equal to 10.0 °C/min, or less than or equal to 9.0 °C/min.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.

Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.

A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.

A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.

The Reactivity is derived by Equation (1).

$$\texttt{Reactivity = (Tm}_{\texttt{max}} \texttt{ - Tm}_0\texttt{)/(T}_{\texttt{max}} \texttt{ - T}_0\texttt{)  (1)}$$

2. Second embodiment

Hereinafter, a second embodiment of the present invention will be described.

[Sulfide-Based Inorganic Solid Electrolyte Material]

The sulfide-based inorganic solid electrolyte material of the present embodiment is a sulfide-based inorganic solid electrolyte material including Li, P, and S as constitutional elements, in which in an X-ray diffraction analysis spectrum of the sulfide-based inorganic solid electrolyte material according to the present embodiment, which is obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$.

<X-ray diffraction analysis>

Using an X-ray diffractometer (RINT2000, manufactured by Rigaku Corporation), an X-ray diffraction analysis spectrum of the sulfide-based inorganic solid electrolyte material is obtained using CuK$\alpha$ rays as a radiation source and using a glass sample plate (Cat No. 9200, sample part: 20 mm $\times$ 20 mm, depth: 0.5 mm) as a sample holder under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.

The X-ray diffraction analysis spectrum of the sulfide-based inorganic solid electrolyte material of the present embodiment, which is obtained by the method described in <X-ray diffraction analysis> above, is similar to the X-ray diffraction analysis spectrum of the $\alpha$ phase Li$_3$PS$_4$.

Specifically, the X-ray diffraction analysis spectrum of the sulfide-based inorganic solid electrolyte material of the present embodiment, which is obtained by the method described in <X-ray diffraction analysis> above, satisfies the following requirements 1 to 3. Further, according to K. Homma, M. Yonemura, M. Nagao, M. Hirayama, R. Kanno, J. Phys. Soc. Jpn., 79, 90-93 (2010), it is found that these requirements also apply to the $\alpha$ phase Li$_3$PS$_4$.

Requirement 1: A peak is present in a range of $2\theta = 17.90 \pm 0.20°$.

Requirement 2: A peak is present in a range of $2\theta = 29.00 \pm 0.50°$.

Requirement 3: A peak is present in a range of $2\theta = 29.75 \pm 0.25°$.

As a result of examination conducted by the present inventors, it has been newly found that in a case where the X-ray diffraction analysis spectrum of the sulfide-based inorganic solid electrolyte material has the above-described characteristics, the lithium ion conductivity of the sulfide-based inorganic solid electrolyte material is improved.

In the X-ray diffraction analysis spectrum of the sulfide-based inorganic solid electrolyte material of the present embodiment obtained by the method described in <X-ray diffraction analysis> above, it is preferable that a peak is present in a range of $2\theta = 20.00° \pm 0.20°$.

In the X-ray diffraction analysis spectrum of the sulfide-based inorganic solid electrolyte material of the present embodiment obtained by the method described in <X-ray diffraction analysis> above, it is preferable that a peak is present in a range of $2\theta = 25.90° \pm 0.20°$.

In the X-ray diffraction analysis spectrum of the sulfide-based inorganic solid electrolyte material of the present embodiment obtained by the method described in <X-ray diffraction analysis> above, it is preferable that a peak present in a range of $2\theta = 17.90 \pm 0.20°$ is not bifurcated.

In the sulfide-based inorganic solid electrolyte material of the present embodiment, the molar ratio (Li/P) of Li to P in the sulfide-based inorganic solid electrolyte material is preferably greater than or equal to 1.0 and less than or equal to 5.0, more preferably greater than or equal to 2.0 and less than or equal to 4.0, still more preferably greater than or equal to 2.5 and less than or equal to 3.5, even still more preferably greater than or equal to 2.7 and less than or equal to 3.3, even still more preferably greater than or equal to 2.8 and less than or equal to 3.2, and even still more preferably greater than or equal to 2.9 and less than or equal to 3.1.

In the sulfide-based inorganic solid electrolyte material of the present embodiment, the molar ratio (S/P) of S to P in the sulfide-based inorganic solid electrolyte material is preferably greater than or equal to 2.0 and less than or equal to 6.0, more preferably greater than or equal to 3.0 and less than or equal to 5.0, still more preferably greater than or equal to 3.5 and less than or equal to 4.5, and even still more preferably greater than or equal to 3.8 and less than or equal to 4.2, and even still more preferably greater than or equal to 3.9 and less than or equal to 4.1.

Here, the molar ratio (Li/P) of Li to P and the molar ratio (S/P) of S to P can be determined by, for example, ICP emission spectrometry or X-ray analysis.

It is preferable that the sulfide-based inorganic solid electrolyte material of the present embodiment includes $Li_3PS_4$.

The content of $Li_3PS_4$ in the sulfide-based inorganic solid electrolyte material of the present embodiment is preferably greater than or equal to 95% by mass, more preferably greater than or equal to 97% by mass, and still more preferably greater than or equal to 99% by mass.

In a case where the sulfide-based inorganic solid electrolyte material of the present embodiment has a particle shape, the lower limit of $D_{50}$ in the volume-based particle size distribution measured by a laser diffraction scattering particle size distribution measurement method is preferably greater than or equal to 0.1 $\mu m$, more preferably greater than or equal to 0.3 $\mu m$, and still more preferably greater than or equal to 0.5 $\mu m$. In this manner, the handleability of the sulfide-based inorganic solid electrolyte material is further improved.

In addition, the upper limit of $D_{50}$ is preferably less than or equal to 150 $\mu m$, more preferably less than or equal to 120 $\mu m$, and still more preferably less than or equal to 100 $\mu m$. In this manner, the lithium ion conductivity is further improved.

The lower limit of the lithium ion conductivity of the sulfide-based inorganic solid electrolyte material of the present embodiment, which is measured by a method described in <Measurement of lithium ion conductivity> below, is preferably greater than or equal to $1.0 \times 10^{-3}$ S/cm, more preferably greater than or equal to $1.1 \times 10^{-3}$ S/cm, and still more preferably greater than or equal to $1.2 \times 10^{-3}$ S/cm. In this manner, a lithium ion battery having more excellent input-output characteristics can be obtained.

The upper limit of the lithium ion conductivity of the sulfide-based inorganic solid electrolyte material of the present embodiment is not particularly limited, but is, for example, less than or equal to $1.0 \times 10^{-2}$ S/cm, and may be less than or equal to $5.0 \times 10^{-3}$ S/cm, less than or equal to $3.0 \times 10^{-3}$ S/cm, or less than or equal to $2.0 \times 10^{-3}$ S/cm.

<Measurement of lithium ion conductivity>

First, 110 mg of the sulfide-based inorganic solid electrolyte material is pressed under conditions of 270 MPa for 10 minutes to obtain a disk-like sample having a diameter of 9.5 mm and a thickness of 1 mm.

Next, using a potentiostat/galvanostat SP-300 (manufactured by Bio-Logic), a lithium ion conductivity of the obtained disk-like sample is measured by an alternating current impedance method under conditions of an applied voltage of 10 mV, a measurement frequency range of 0.1 Hz to 3 MHz, and a measurement temperature of 27°C, using a Li foil as an electrode.

The upper limit of the maximum value of the oxidative decomposition current of the sulfide-based inorganic solid electrolyte material of the present embodiment, which is measured by a method described in <Measurement of maximum value of oxidative decomposition current> below, is preferably less than or equal to $0.5 \times 10^{-5}$ mA, preferably less than or equal to $0.2 \times 10^{-5}$ mA, more preferably less than or equal to $0.1 \times 10^{-5}$ mA, still more preferably less than or equal to $0.09 \times 10^{-5}$ mA, and even still more preferably less than or equal to $0.08 \times 10^{-5}$ mA. In this manner, the oxidative decomposition of the sulfide-based inorganic solid electrolyte material in the lithium ion battery can be further suppressed.

The lower limit of the maximum value of the oxidative decomposition current of the sulfide-based inorganic solid electrolyte material of the present embodiment is not particularly limited, but is, for example, greater than or equal to 0.001 × $10^{-5}$ mA.

<Measurement of maximum value of oxidative decomposition current>

First, 150 mg of the sulfide-based inorganic solid electrolyte material is pressed under conditions of 270 MPa for 10 minutes to obtain a disk-like sample having a diameter of 9.5 mm and a thickness of 1.3 mm.

Next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface.

Next, a maximum value of an oxidative decomposition current of the obtained pellet is measured under conditions of a sweep voltage range of 0 to 10 V, a voltage sweep rate of 5 mV/sec, and a measurement temperature of 25°C using a potentiostat/galvanostat SP-300 (manufactured by Bio-Logic).

[Method of producing sulfide-based inorganic solid electrolyte material]

Since the method of producing a sulfide-based inorganic solid electrolyte material of the present embodiment is the same as the method of producing a sulfide-based inorganic solid electrolyte material of the first embodiment, the description thereof will not be repeated here.

[Sulfide-based inorganic solid electrolyte]

The sulfide-based inorganic solid electrolyte according to the present embodiment is the same as the sulfide-based inorganic solid electrolyte material according to the first embodiment except that the sulfide-based inorganic solid electrolyte according to the present embodiment includes the sulfide-based inorganic solid electrolyte material according to the present embodiment, and thus the description thereof will not be repeated here.

[Sulfide-based inorganic solid electrolyte film]

The sulfide-based inorganic solid electrolyte film according to the present embodiment is the same as the sulfide-based inorganic solid electrolyte film according to the first embodiment except that the sulfide-based inorganic solid electrolyte film according to the present embodiment contains the solid electrolyte according to the present embodiment as a main component, and thus the description thereof will not be repeated here.

[Lithium ion battery]

Since the lithium ion battery according to the present embodiment is the same as the lithium ion battery according to the first embodiment except that at least one of the positive electrode active material layer, the electrolyte layer, or the negative electrode active material layer contains the sulfide-based inorganic solid electrolyte material according to the present embodiment, the description thereof will not be repeated here.

The embodiments of the present invention have been described above, but these are examples of the present invention and various configurations other than the above can be adopted.

In addition, the present invention is not limited to the above-described embodiments, and modifications, improvements, and the like within a range where the object of the present invention can be achieved are included in the present invention. Examples

Hereinafter, the present invention will be described in more detail using Examples and Comparative Examples. However, the present invention is not limited to these Examples and Comparative Examples.

[Preparation of sulfide-based inorganic solid electrolyte material]

<Example 1>

First, a total of 2.1 g of powdery $P_2S_5$ (product name: Normal/S, Lot. 22D1218594, hereinafter, referred to as "phosphorus sulfide composition 1") and $Li_2S$ (manufactured by FURUKAWA CO.,LTD., purity: 99.9%) were weighed in an argon atmosphere at 20°C. In this case, the molar ratio was set to $Li_2S:P_2S_5$ = 3:1. That is, the molar ratios of elements were Li:P = 3:1 and S:P = 4:1, and Li/P = 3 and S/P = 4.

Step (a): The weighed phosphorus sulfide composition 1 and $Li_2S$ were mixed while being ground in a mortar in an argon atmosphere at 20°C to obtain a mixture (a).

Step (b): 2.1 g of the mixture (a) obtained in the step (a) was subjected to a mechanochemical treatment using a planetary ball mill (using 45 mL zirconia pot and 18 zirconia balls having a diameter of 10 mm) in an argon atmosphere at 20°C, thereby obtaining a material (1). Specifically, a treatment of mechanically milling the material at 400 rpm for 10 minutes and allowing the material to stand for 5 minutes was performed for 120 cycles to obtain a material (b). In the step (b), during the process, the powder attached to the zirconia pot wall surface and the zirconia ball surface was scraped off after 15 hours from the start of the mechanochemical treatment.

Step (c): The material (b) obtained in the step (b) was placed in a carbon crucible and subjected to a heat treatment in a heating furnace in an argon atmosphere at 270°C for 2 hours, thereby obtaining a sulfide-based inorganic solid electrolyte material 1 containing $Li_3PS_4$.

<Example 2>

A sulfide-based inorganic solid electrolyte material 2 containing $Li_3PS_4$ was obtained in the same manner as in Example 1 except that powdery $P_2S_5$ (product name: Normal/S, Lot. 22D1218453, hereinafter, referred to as "phosphorus sulfide composition 2") was used instead of the phosphorus sulfide composition 1.

<Comparative Example 1>

A sulfide-based inorganic solid electrolyte material 3 was obtained in the same manner as in Example 1 except that powdery $P_2S_5$ (product name: Normal/S, Lot. 22D1221141, hereinafter, referred to as "phosphorus sulfide composition 3") was used instead of the phosphorus sulfide composition 1.

<Comparative Example 2>

First, powdery $P_2S_5$ (product name: Normal/S, Lot. 22D1221141) was placed in a quartz container and set in a vacuum heating device (manufactured by FURUKAWA CO.,LTD.), the temperature was raised from 30°C to 350°C for 15 minutes under a reduced pressure of -0.094 MPa, and the powder was heated at 350°C for 10 minutes.

Next, the quartz container heated to 350°C was immersed in a bucket filled with water while each valve was closed and a vacuum state was maintained, and the temperature was rapidly lowered to 30°C. The time taken for cooling from 350°C to 30°C was 3 minutes. The components accumulated at the bottom of the quartz container cooled to 30°C were defined as "phosphorus sulfide composition 4".

Next, a sulfide-based inorganic solid electrolyte material 4 was obtained in the same manner as in Example 1 except that the phosphorus sulfide composition 4 was used instead of the phosphorus sulfide composition 1.

[Method of measuring Reactivity]

The Reactivities of the phosphorus sulfide compositions 1 to 4 were measured by the following method. The results are listed in Table 1.

First, $P_2S_5$ was pulverized with an agate mortar in an argon atmosphere, and classified with a sieve having an opening of 500 μm, an undersieve was classified with a sieve having an opening of 250 μm, and greater than or equal to 10 g of an oversieve was collected. 9.20 g of the collected powder was weighed, and this was used as test powder.

Next, 25 ml of 2-propanol dried over 24 hours or longer with Molecular Sieve 3A 1/16 was put into a 100 ml tall beaker, and the mixture was stirred under conditions of 20°C and 200 rpm, and the entire amount of the test powder was added thereto.

A time point at which the entire amount of the test powder was put into the tall beaker was defined as a measurement start time $T_0$, and the temperature of the liquid in the tall beaker was measured at an interval of 2 seconds from $T_0$. The temperature of the liquid in the tall beaker measured at $T_0$ was defined as a temperature $Tm_0$ at the measurement start time.

A time point at which the temperature of the liquid in the tall beaker stops rising was defined as a maximum temperature reaching time $T_{max}$, and a temperature of the liquid in the tall beaker measured at $T_{max}$ was defined as a maximum temperature $Tm_{max}$.

The Reactivity was derived by Equation (1).

$$\text{Reactivity} = (Tm_{max} - Tm_0)/(T_{max} - T_0) \quad (1)$$

[Measurement of lithium ion conductivity]

The lithium ion conductivities of the sulfide-based inorganic solid electrolyte materials 1 to 4 were measured by the following method. The results are listed in Table 1.

First, 110 mg of the sulfide-based inorganic solid electrolyte material was pressed under conditions of 270 MPa for 10 minutes to obtain a disk-like sample having a diameter of 9.5 mm and a thickness of 1 mm.

Next, using a potentiostat/galvanostat SP-300 (manufactured by Bio-Logic), the lithium ion conductivity of the obtained disk-like sample was measured by an alternating current impedance method under conditions of an applied voltage of 10 mV, a measurement frequency range of 0.1 Hz to 3 MHz, and a measurement temperature of 27°C, using a Li foil as an electrode.

[Measurement of maximum value of oxidative decomposition current]

The maximum values of the oxidative decomposition currents of the sulfide-based inorganic solid electrolyte materials 1 to 4 were measured by the following method. The results are listed in Table 1.

First, 150 mg of the sulfide-based inorganic solid electrolyte material was pressed under conditions of 270 MPa for 10 minutes to obtain a disk-like sample having a diameter of 9.5 mm and a thickness of 1.3 mm.

Next, a Li foil was pressure-bonded to one surface of the obtained disk-like sample as a reference electrode and a counter electrode under conditions of 18 MPa for 10 minutes, the other surface was turned upward, and a SUS314 foil serving as a working electrode is attached to the surface.

Next, the maximum value of the oxidative decomposition current of the obtained pellet was measured under conditions of a sweep voltage range of 0 to 10 V, a voltage sweep rate of 5 mV/sec, and a measurement temperature of 25°C using a potentiostat/galvanostat SP-300 (manufactured by Bio-Logic).

[Table 1]

| | | Example 1 | Example 2 | Comparative Example 1 | Comparative Example 2 |
|---|---|---|---|---|---|
| Phosphorus sulfide composition | Reactivity (unit: °C/min) | 8.2 | 7.0 | 4.3 | 0.13 |
| Sulfide-based inorganic solid electrolyte material | Lithium ion conductivity (unit: $10^{-3}$ S/cm) | 1.34 | 1.24 | 0.96 | 0.89 |
| | Maximum value of oxidative decomposition current (unit: $10^{-5}$ mA) | 0.08 | 0.08 | 0.15 | 0.20 |

The sulfide-based inorganic solid electrolyte materials of the examples exhibited a lithium ion conductivity higher than that of the comparative examples. As a result, it can be seen that a sulfide-based inorganic solid electrolyte material having an improved lithium ion conductivity can be produced according to the phosphorus sulfide composition of the present embodiment.

[X-ray diffraction analysis]

X-ray diffraction analysis spectra of the sulfide-based inorganic solid electrolyte materials 1 to 4 were obtained using CuKα rays as a radiation source and using a glass sample plate (Cat No. 9200, sample part: 20 mm × 20 mm, depth: 0.5 mm) as a sample holder under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90° using an X-ray diffractometer (RINT2000, manufactured by Rigaku Corporation).

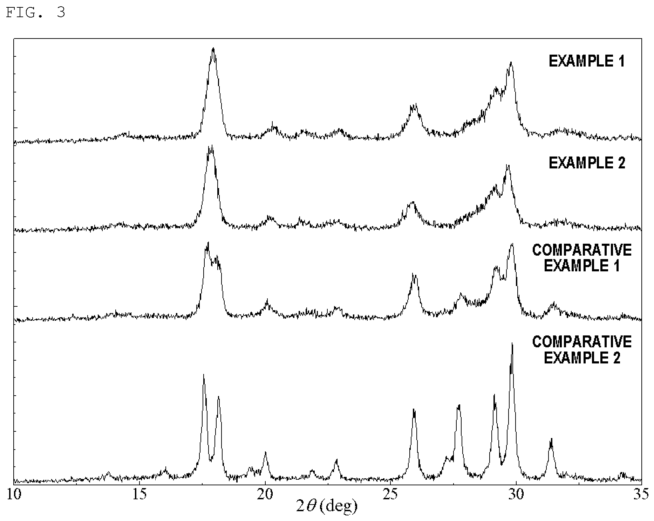

FIG. 2 shows the X-ray diffraction analysis spectra of the sulfide-based inorganic solid electrolyte materials 1 to 4. In addition, FIG. 3 shows enlarged views of the X-ray diffraction analysis spectra of the sulfide-based inorganic solid electrolyte materials 1 to 4 in a range of $2\theta = 10°$ to $35°$.

In the X-ray diffraction analysis spectra of the sulfide-based inorganic solid electrolyte materials of Examples 1 and 2, a peak was not present in a range of $2\theta = 27.70 \pm 0.50°$, a peak was present in a range of $2\theta = 17.90 \pm 0.20°$, a peak was present in a range of $2\theta = 29.00 \pm 0.50°$, and a peak was present in a range of $2\theta = 29.75 \pm 0.25°$.

On the other hand, in the X-ray diffraction analysis spectra of the sulfide-based inorganic solid electrolyte materials of Comparative Examples 1 and 2, a peak was present in a range of $2\theta = 27.70 \pm 0.50°$.

In the X-ray diffraction analysis spectra of the sulfide-based inorganic solid electrolyte materials of Examples 1 and 2, the peak present in the range of $2\theta = 17.90 \pm 0.20$ was not bifurcated.

On the other hand, in the X-ray diffraction analysis spectra of the sulfide-based inorganic solid electrolyte materials of Comparative Examples 1 and 2, the peak present in the range of $2\theta = 17.90 \pm 0.20$ was bifurcated.

This application claims priority based on Japanese Patent Application No. 2022-128495, Japanese Patent Application No. 2022-128496, and Japanese Patent Application No. 2022-128497, filed August 10, 2022, the entire disclosures of which are incorporated herein by reference.

The present invention may also take the following aspects.

[1a]

A phosphorus sulfide composition for a sulfide-based inorganic solid electrolyte material, in which Reactivity measured by a following [Method 1] is greater than or equal to 5.0 °C/min.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.

Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.

A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.

A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.

The Reactivity is derived by Equation (1).

$$\text{Reactivity} = (Tm_{max} - Tm_0)/(T_{max} - T_0) \quad (1)$$

[2a]
The phosphorus sulfide composition according to [1a], including: $P_2S_5$.

[3a]
The phosphorus sulfide composition according to [2a], in which a content of the $P_2S_5$ in the phosphorus sulfide composition is greater than or equal to 95% by mass.

[4a]
The phosphorus sulfide composition according to any one of [1a] to [3a], in which the phosphorus sulfide composition is in a powder form.

[5a]
A raw material composition for a sulfide-based inorganic solid electrolyte material, including: the phosphorus sulfide composition according to any one of [1a] to [4a]; and lithium sulfide.

[6a]
A method of producing a sulfide-based inorganic solid electrolyte material, including: a step of mechanically treating the raw material composition for the sulfide-based inorganic solid electrolyte material according to [5a].

[7a]
A sulfide-based inorganic solid electrolyte material, which is obtained by using the phosphorus sulfide composition according to any one of [1a] to [4a] as a raw material.

[8a]
A sulfide-based inorganic solid electrolyte including: the sulfide-based inorganic solid electrolyte material according to [7a].

[9a]
A sulfide-based inorganic solid electrolyte film including: the sulfide-based inorganic solid electrolyte according to [8a] as a main component.

[10a]
A lithium ion battery including: a positive electrode which includes a positive electrode active material layer; an electrolyte layer; and a negative electrode which includes a negative electrode active material layer, in which at least one of the positive electrode active material layer, the electrolyte layer, or the negative electrode active material layer contains the sulfide-based inorganic solid electrolyte according to [7a].

[11a]
A method of producing a phosphorus sulfide composition for a sulfide-based inorganic solid electrolyte material, the method including: a step of selecting a phosphorus sulfide composition in which Reactivity measured by a following [Method 1] is greater than or equal to 5.0 °C/min.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.
Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.
A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.
A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.
The Reactivity is derived by Equation (1).

$$\mathrm{Reactivity} = (Tm_{max} - Tm_0)/(T_{max} - T_0) \quad (1)$$

[12a]
A quality control method for a phosphorus sulfide composition for a sulfide-based inorganic solid electrolyte material, the method including: a step of determining that a phosphorus sulfide composition in which Reactivity measured by a following [Method 1] is greater than or equal to 5.0 °C/min is acceptable.

[Method 1]

First, the phosphorus sulfide composition is pulverized in an agate mortar in an argon atmosphere, and classified with a sieve having an opening of 500 $\mu$m, an undersieve is classified with a sieve having an opening of 250 $\mu$m, and greater than or equal to 10 g of an oversieve is collected. 9.20 g of the collected powder is weighed and used as test powder.
Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.
A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.
A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.
The Reactivity is derived by Equation (1).

$$\mathrm{Reactivity} = (Tm_{max} - Tm_0)/(T_{max} - T_0) \quad (1)$$

The present invention may also take the following aspects.

[1b]
A method of producing a sulfide-based inorganic solid electrolyte material, including: a step of mixing a raw material composition containing lithium sulfide and a phosphorus sulfide composition having a Reactivity of greater than or equal to 5.0 °C/min, which is measured by a following [Method 1] to obtain a mixture; and a step of performing a mechanochemical treatment on the obtained mixture to obtain a mechanochemically treated product.

[Method 1]

First, the phosphorus sulfide composition is pulverized in an agate mortar in an argon atmosphere, and classified with a sieve having an opening of 500 μm, an undersieve is classified with a sieve having an opening of 250 μm, and greater than or equal to 10 g of an oversieve is collected. 9.20 g of the collected powder is weighed and used as test powder.
Next, 25 ml of 2-propanol dried over 24 hours or longer with Molecular Sieve 3A 1/16 is put into a 100 ml tall beaker, and the 2-propanol is stirred under conditions of 20°C and 200 rpm, and an entire amount of the test powder is added thereto.
A time point at which the entire amount of the test powder is added is defined as a measurement start time $T_0$, and a temperature of the liquid in the tall beaker is measured at an interval of 2 seconds from $T_0$. A temperature of the liquid in the tall beaker measured at $T_0$ is defined as a temperature $Tm_0$ at the measurement start time.
A time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$.
The Reactivity is derived by Equation (1).

$$\text{Reactivity} = (Tm_{max} - Tm_0)/(T_{max} - T_0) \quad (1)$$

[2b]
The method of producing a sulfide-based inorganic solid electrolyte material according to [1b], in which the phosphorus sulfide composition contains $P_2S_5$.
[3b]
The method of producing a sulfide-based inorganic solid electrolyte material according to [2b], in which a content of $P_2S_5$ in the phosphorus sulfide composition is greater than or equal to 95% by mass.
[4b]
The method of producing a sulfide-based inorganic solid electrolyte material according to any one of [1b] to [3b], further including: a step of performing a heat treatment on the mechanochemically treated product at a temperature of higher than or equal to 180°C and lower than 450°C.
[5b]
The method of producing a sulfide-based inorganic solid electrolyte material according to any one of [1b] to [4b], in which the method does not include a step of heating the mechanochemically treated product at higher than or equal to 450°C.
[6b]
The method of producing a sulfide-based inorganic solid electrolyte material according to any one of [1b] to [5b], in which a lithium ion conductivity of the sulfide-based inorganic solid electrolyte material, which is measured by a method described in <Measurement of lithium ion conductivity> below, is greater than or equal to $1.0 \times 10^{-3}$ S/cm.

<Measurement of lithium ion conductivity>

First, 110 mg of the sulfide-based inorganic solid electrolyte material is pressed under conditions of 270 MPa for 10 minutes to obtain a disk-like sample having a diameter of 9.5 mm and a thickness of 1 mm.
Next, a lithium ion conductivity of the obtained disk-like sample is measured by an alternating current impedance method using a Li foil as an electrode under conditions of an applied voltage of 10 mV, a measurement frequency range of 0.1 Hz to 3 MHz, and a measurement temperature of 27°C using an electrochemical measurement device.
[7b]
The method of producing a sulfide-based inorganic solid electrolyte material according to any one of [1b] to [6b], in which an oxidative decomposition current value of the sulfide-based inorganic solid electrolyte material, which is measured by a method described in <Measurement of maximum value of oxidative decomposition current> below, is less than or equal to $0.10 \times 10^{-5}$ mA.

<Measurement of maximum value of oxidative decomposition current>

First, 150 mg of the sulfide-based inorganic solid electrolyte material is pressed under conditions of 270 MPa for

**EP 4 571 785 A1**

10 minutes to obtain a disk-like sample having a diameter of 9.5 mm and a thickness of 1.3 mm.

Next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface.

Next, a maximum value of an oxidative decomposition current of the obtained pellet is measured under conditions of a sweep voltage range of 0 to 10 V, a voltage sweep rate of 5 mV/sec, and a measurement temperature of 25°C using an electrochemical measurement device.

[8b]
The method of producing a sulfide-based inorganic solid electrolyte material according to any one of [1b] to [7b], in which in an X-ray diffraction analysis spectrum of the sulfide-based inorganic solid electrolyte material obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$.

<X-ray diffraction analysis>

Using an X-ray diffractometer, an X-ray diffraction analysis spectrum of the sulfide-based inorganic solid electrolyte material is obtained using CuK$\alpha$ rays as a radiation source under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.

[9b]
The method of producing a sulfide-based inorganic solid electrolyte material according to any one of [1b] to [8b], in which the sulfide-based inorganic solid electrolyte material includes $Li_3PS_4$.

[10b]
The method of producing a sulfide-based inorganic solid electrolyte material according to [9b], in which $Li_3PS_4$ is $\alpha$-type $Li_3PS_4$.

[11b]
A sulfide-based inorganic solid electrolyte material which is obtained by the method of producing a sulfide-based inorganic solid electrolyte material according to any one of [1b] to [10b].

[12b]
A sulfide-based inorganic solid electrolyte including: the sulfide-based inorganic solid electrolyte material according to [11b].

[13b]
A sulfide-based inorganic solid electrolyte film including: the sulfide-based inorganic solid electrolyte according to [12b] as a main component.

[14b]
A lithium ion battery including: a positive electrode which includes a positive electrode active material layer; an electrolyte layer; and a negative electrode which includes a negative electrode active material layer, in which at least one of the positive electrode active material layer, the electrolyte layer, or the negative electrode active material layer contains the sulfide-based inorganic solid electrolyte material according to [11b].

The present invention may also take the following aspects.

[1c]
A sulfide-based inorganic solid electrolyte material including: Li, P, and S as constitutional elements, in which in an X-ray diffraction analysis spectrum of the sulfide-based inorganic solid electrolyte material obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$.

<X-ray diffraction analysis>

Using an X-ray diffractometer, an X-ray diffraction analysis spectrum of the sulfide-based inorganic solid electrolyte material is obtained using CuK$\alpha$ rays as a radiation source and a glass sample plate as a sample holder under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.

[2c]
The sulfide-based inorganic solid electrolyte material according to [1c], further including: $Li_3PS_4$.

[3c]
The sulfide-based inorganic solid electrolyte material according to [2c], in which a content of the $Li_3PS_4$ is greater than or equal to 95% by mass.

26

[4c]
The sulfide-based inorganic solid electrolyte material according to any one of [1c] to [3c], in which a lithium ion conductivity of the sulfide-based inorganic solid electrolyte material, which is measured by a method described in <Measurement of lithium ion conductivity> below, is greater than or equal to $1.0 \times 10^{-3}$ S/cm.

<Measurement of lithium ion conductivity>

First, 110 mg of the sulfide-based inorganic solid electrolyte material is pressed under conditions of 270 MPa for 10 minutes to obtain a disk-like sample having a diameter of 9.5 mm and a thickness of 1 mm.
Next, a lithium ion conductivity of the obtained disk-like sample is measured by an alternating current impedance method using a Li foil as an electrode under conditions of an applied voltage of 10 mV, a measurement frequency range of 0.1 Hz to 3 MHz, and a measurement temperature of 27°C using an electrochemical measurement device.
[5c]
The sulfide-based inorganic solid electrolyte material according to any one of [1c] to [4c], in which an oxidative decomposition current value of the sulfide-based inorganic solid electrolyte material, which is measured by a method described in <Measurement of maximum value of oxidative decomposition current> below, is less than or equal to $0.10 \times 10^{-5}$ mA.

<Measurement of maximum value of oxidative decomposition current>

First, 150 mg of the sulfide-based inorganic solid electrolyte material is pressed under conditions of 270 MPa for 10 minutes to obtain a disk-like sample having a diameter of 9.5 mm and a thickness of 1.3 mm.
Next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface.
Next, a maximum value of an oxidative decomposition current of the obtained pellet is measured under conditions of a sweep voltage range of 0 to 10 V, a voltage sweep rate of 5 mV/sec, and a measurement temperature of 25°C using an electrochemical measurement device.
[6c]
A sulfide-based inorganic solid electrolyte including: the sulfide-based inorganic solid electrolyte material according to any one of [1c] to [5c].
[7c]
A sulfide-based inorganic solid electrolyte film including: the sulfide-based inorganic solid electrolyte according to [6c] as a main component.
[8c]
A lithium ion battery including: a positive electrode which includes a positive electrode active material layer; an electrolyte layer; and a negative electrode which includes a negative electrode active material layer, in which at least one of the positive electrode active material layer, the electrolyte layer, or the negative electrode active material layer contains the sulfide-based inorganic solid electrolyte material according to any one of [1c] to [5c].

REFERENCE SIGNS LIST

100    lithium ion battery
101    positive electrode active material layer
103    negative electrode active material layer
105    current collector
110    positive electrode
120    electrolyte layer
130    negative electrode

**Claims**

1.  A phosphorus sulfide composition for a sulfide-based inorganic solid electrolyte material,

wherein Reactivity measured by a following [Method 1] is greater than or equal to 5.0 °C/min,
[Method 1]

first, the phosphorus sulfide composition is pulverized in an agate mortar in an argon atmosphere, and classified with a sieve having an opening of 500 $\mu$m, an undersieve is classified with a sieve having an opening of 250 $\mu$m, greater than or equal to 10 g of an oversieve is collected, and 9.20 g of the collected powder is weighed and used as test powder,

next, 25 ml of 2-propanol dried over 24 hours or longer with Molecular Sieve 3A 1/16 is put into a 100 ml tall beaker, the 2-propanol is stirred under conditions of 20°C and 200 rpm, and an entire amount of the test powder is added thereto,

a time point at which the entire amount of the test powder is added is defined as a measurement start time $T_0$, a temperature of the liquid in the tall beaker is measured at an interval of 2 seconds from $T_0$, and a temperature of the liquid in the tall beaker measured at $T_0$ is defined as a temperature $Tm_0$ at the measurement start time,

a time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$,

the Reactivity is derived by Equation (1),

$$\mathrm{Reactivity\ =\ (Tm_{max}\ -\ Tm_0)/(T_{max}\ -\ T_0)\ \ (1).}$$

**2.** The phosphorus sulfide composition according to Claim 1, comprising:
$P_2S_5$.

**3.** The phosphorus sulfide composition according to Claim 2,
wherein a content of the $P_2S_5$ in the phosphorus sulfide composition is greater than or equal to 95% by mass.

**4.** The phosphorus sulfide composition according to any one of Claims 1 to 3,
wherein the phosphorus sulfide composition is in a powder form.

**5.** A raw material composition for a sulfide-based inorganic solid electrolyte material, comprising:

the phosphorus sulfide composition according to any one of Claims 1 to 4; and
lithium sulfide.

**6.** A method of producing a sulfide-based inorganic solid electrolyte material, comprising:
a step of mechanically treating the raw material composition for the sulfide-based inorganic solid electrolyte material according to Claim **5.**

**7.** A sulfide-based inorganic solid electrolyte material which is obtained by using the phosphorus sulfide composition according to any one of Claims 1 to 4 as a raw material.

**8.** A sulfide-based inorganic solid electrolyte comprising:
the sulfide-based inorganic solid electrolyte material according to Claim 7.

**9.** A sulfide-based inorganic solid electrolyte film comprising:
the sulfide-based inorganic solid electrolyte according to Claim 8 as a main component.

**10.** A lithium ion battery comprising:

a positive electrode which includes a positive electrode active material layer;
an electrolyte layer; and
a negative electrode which includes a negative electrode active material layer,
wherein at least one of the positive electrode active material layer, the electrolyte layer, or the negative electrode active material layer contains the sulfide-based inorganic solid electrolyte material according to Claim 7.

**11.** A method of producing a phosphorus sulfide composition for a sulfide-based inorganic solid electrolyte material, the method comprising:

a step of selecting a phosphorus sulfide composition in which Reactivity measured by a following [Method 1] is greater than or equal to 5.0 °C/min,

[Method 1]

first, the phosphorus sulfide composition is pulverized in an agate mortar in an argon atmosphere, and classified with a sieve having an opening of 500 $\mu$m, an undersieve is classified with a sieve having an opening of 250 $\mu$m, greater than or equal to 10 g of an oversieve is collected, and 9.20 g of the collected powder is weighed and used as test powder,

next, 25 ml of 2-propanol dried over 24 hours or longer with Molecular Sieve 3A 1/16 is put into a 100 ml tall beaker, the 2-propanol is stirred under conditions of 20°C and 200 rpm, and an entire amount of the test powder is added thereto,

a time point at which the entire amount of the test powder is added is defined as a measurement start time $T_0$, a temperature of the liquid in the tall beaker is measured at an interval of 2 seconds from $T_0$, and a temperature of the liquid in the tall beaker measured at $T_0$ is defined as a temperature $Tm_0$ at the measurement start time,

a time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$,

the Reactivity is derived by Equation (1),

$$\text{Reactivity} = (Tm_{max} - Tm_0)/(T_{max} - T_0) \quad (1).$$

12. A quality control method for a phosphorus sulfide composition for a sulfide-based inorganic solid electrolyte material, the method comprising:

a step of determining that a phosphorus sulfide composition in which Reactivity measured by a following [Method 1] is greater than or equal to 5.0 °C/min is acceptable,

[Method 1]

first, the phosphorus sulfide composition is pulverized in an agate mortar in an argon atmosphere, and classified with a sieve having an opening of 500 $\mu$m, an undersieve is classified with a sieve having an opening of 250 $\mu$m, greater than or equal to 10 g of an oversieve is collected, and 9.20 g of the collected powder is weighed and used as test powder,

next, 25 ml of 2-propanol dried over 24 hours or longer with Molecular Sieve 3A 1/16 is put into a 100 ml tall beaker, the 2-propanol is stirred under conditions of 20°C and 200 rpm, and an entire amount of the test powder is added thereto,

a time point at which the entire amount of the test powder is added is defined as a measurement start time $T_0$, a temperature of the liquid in the tall beaker is measured at an interval of 2 seconds from $T_0$, and a temperature of the liquid in the tall beaker measured at $T_0$ is defined as a temperature $Tm_0$ at the measurement start time,

a time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$,

the Reactivity is derived by Equation (1),

$$\text{Reactivity} = (Tm_{max} - Tm_0)/(T_{max} - T_0) \quad (1).$$

13. A method of producing a sulfide-based inorganic solid electrolyte material, comprising:

a step of mixing a raw material composition containing lithium sulfide and the phosphorus sulfide composition according to any one of Claims 1 to 4 to obtain a mixture; and

a step of performing a mechanochemical treatment on the obtained mixture to obtain a mechanochemically treated product,

[Method 1]

first, the phosphorus sulfide composition is pulverized in an agate mortar in an argon atmosphere, and classified with a sieve having an opening of 500 $\mu$m, an undersieve is classified with a sieve having an opening of 250 $\mu$m, greater than or equal to 10 g of an oversieve is collected, and 9.20 g of the collected powder is weighed and used as test powder,

next, 25 ml of 2-propanol dried over 24 hours or longer with Molecular Sieve 3A 1/16 is put into a 100 ml tall beaker, the 2-propanol is stirred under conditions of 20°C and 200 rpm, and an entire amount of the test powder is added thereto,

a time point at which the entire amount of the test powder is added is defined as a measurement start time $T_0$, a temperature of the liquid in the tall beaker is measured at an interval of 2 seconds from $T_0$, and a temperature of the liquid in the tall beaker measured at $T_0$ is defined as a temperature $Tm_0$ at the measurement start time, a time point at which the temperature of the liquid in the tall beaker stops rising is defined as a maximum temperature reaching time $T_{max}$, and a temperature of the liquid in the tall beaker measured at $T_{max}$ is defined as a maximum temperature $Tm_{max}$, the Reactivity is derived by Equation (1),

$$\text{Reactivity} = (Tm_{max} - Tm_0)/(T_{max} - T_0) \quad (1).$$

14. The method of producing a sulfide-based inorganic solid electrolyte material according to Claim 13, further comprising:
a step of performing a heat treatment on the mechanochemically treated product at a temperature of higher than or equal to 180°C and lower than 450°C.

15. The method of producing a sulfide-based inorganic solid electrolyte material according to Claim 13 or 14, wherein the method does not include a step of heating the mechanochemically treated product at higher than or equal to 450°C.

16. The method of producing a sulfide-based inorganic solid electrolyte material according to any one of Claims 13 to 15,

wherein a lithium ion conductivity of the sulfide-based inorganic solid electrolyte material, which is measured by a method described in <Measurement of lithium ion conductivity> below, is greater than or equal to $1.0 \times 10^{-3}$ S/cm,
<Measurement of lithium ion conductivity>
first, 110 mg of the sulfide-based inorganic solid electrolyte material is pressed under conditions of 270 MPa for 10 minutes to obtain a disk-like sample having a diameter of 9.5 mm and a thickness of 1 mm, and
next, a lithium ion conductivity of the obtained disk-like sample is measured by an alternating current impedance method using a Li foil as an electrode under conditions of an applied voltage of 10 mV, a measurement frequency range of 0.1 Hz to 3 MHz, and a measurement temperature of 27°C using an electrochemical measurement device.

17. The method of producing a sulfide-based inorganic solid electrolyte material according to any one of Claims 13 to 16,

wherein an oxidative decomposition current value of the sulfide-based inorganic solid electrolyte material, which is measured by a method described in <Measurement of maximum value of oxidative decomposition current> below, is less than or equal to $0.10 \times 10^{-5}$ mA,
<Measurement of maximum value of oxidative decomposition current>
first, 150 mg of the sulfide-based inorganic solid electrolyte material is pressed under conditions of 270 MPa for 10 minutes to obtain a disk-like sample having a diameter of 9.5 mm and a thickness of 1.3 mm,
next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface, and
next, a maximum value of an oxidative decomposition current of the obtained pellet is measured under conditions of a sweep voltage range of 0 to 10 V, a voltage sweep rate of 5 mV/sec, and a measurement temperature of 25°C using an electrochemical measurement device.

18. The method of producing a sulfide-based inorganic solid electrolyte material according to any one of Claims 13 to 17,

wherein in an X-ray diffraction analysis spectrum of the sulfide-based inorganic solid electrolyte material, which is obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$,
<X-ray diffraction analysis>
using an X-ray diffractometer, an X-ray diffraction analysis spectrum of the sulfide-based inorganic solid electrolyte material is obtained using CuKα rays as a radiation source under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.

19. The method of producing a sulfide-based inorganic solid electrolyte material according to any one of Claims 13 to 18,

wherein the sulfide-based inorganic solid electrolyte material includes $Li_3PS_4$.

20. The method of producing a sulfide-based inorganic solid electrolyte material according to Claim 19, wherein the $Li_3PS_4$ is $\alpha$-type $Li_3PS_4$.

21. A sulfide-based inorganic solid electrolyte material which is obtained by the method of producing a sulfide-based inorganic solid electrolyte material according to any one of Claims 13 to 20.

22. A sulfide-based inorganic solid electrolyte comprising:
the sulfide-based inorganic solid electrolyte material according to Claim 21.

23. A sulfide-based inorganic solid electrolyte film comprising:
the sulfide-based inorganic solid electrolyte according to Claim 22 as a main component.

24. A lithium ion battery comprising:

a positive electrode which includes a positive electrode active material layer;
an electrolyte layer; and
a negative electrode which includes a negative electrode active material layer,
wherein at least one of the positive electrode active material layer, the electrolyte layer, or the negative electrode active material layer contains the sulfide-based inorganic solid electrolyte material according to Claim 21.

25. A sulfide-based inorganic solid electrolyte material comprising:

Li, P, and S as constitutional elements,
wherein in an X-ray diffraction analysis spectrum of the sulfide-based inorganic solid electrolyte material, which is obtained by a method described in <X-ray diffraction analysis> below, a peak is not present in a range of $2\theta = 27.70 \pm 0.50°$, a peak is present in a range of $2\theta = 17.90 \pm 0.20°$, a peak is present in a range of $2\theta = 29.00 \pm 0.50°$, and a peak is present in a range of $2\theta = 29.75 \pm 0.25°$,
<X-ray diffraction analysis>
using an X-ray diffractometer, an X-ray diffraction analysis spectrum of the sulfide-based inorganic solid electrolyte material is obtained using $CuK\alpha$ rays as a radiation source and a glass sample plate as a sample holder under conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°.

26. The sulfide-based inorganic solid electrolyte material according to Claim 25, further comprising:
$Li_3PS_4$.

27. The sulfide-based inorganic solid electrolyte material according to Claim 26, wherein a content of the $Li_3PS_4$ is greater than or equal to 95% by mass.

28. The sulfide-based inorganic solid electrolyte material according to any one of Claims 25 to 27,

wherein a lithium ion conductivity of the sulfide-based inorganic solid electrolyte material, which is measured by a method described in <Measurement of lithium ion conductivity> below, is greater than or equal to $1.0 \times 10^{-3}$ S/cm.
<Measurement of lithium ion conductivity>
first, 110 mg of the sulfide-based inorganic solid electrolyte material is pressed under conditions of 270 MPa for 10 minutes to obtain a disk-like sample having a diameter of 9.5 mm and a thickness of 1 mm, and
next, a lithium ion conductivity of the obtained disk-like sample is measured by an alternating current impedance method using a Li foil as an electrode under conditions of an applied voltage of 10 mV, a measurement frequency range of 0.1 Hz to 3 MHz, and a measurement temperature of 27°C using an electrochemical measurement device.

29. The sulfide-based inorganic solid electrolyte material according to any one of Claims 25 to 28,

wherein an oxidative decomposition current value of the sulfide-based inorganic solid electrolyte material, which is measured by a method described in <Measurement of maximum value of oxidative decomposition current> below, is less than or equal to $0.10 \times 10^{-5}$ mA,

<Measurement of maximum value of oxidative decomposition current>

first, 150 mg of the sulfide-based inorganic solid electrolyte material is pressed under conditions of 270 MPa for 10 minutes to obtain a disk-like sample having a diameter of 9.5 mm and a thickness of 1.3 mm,

next, a Li foil is pressure-bonded to one surface of the obtained disk-like sample as a reference electrode and a counter electrode under conditions of 18 MPa for 10 minutes, the other surface is turned upward, and a SUS314 foil serving as a working electrode is attached to the surface, and

next, a maximum value of an oxidative decomposition current of the obtained pellet is measured under conditions of a sweep voltage range of 0 to 10 V, a voltage sweep rate of 5 mV/sec, and a measurement temperature of 25°C using an electrochemical measurement device.

30. A sulfide-based inorganic solid electrolyte comprising:
    the sulfide-based inorganic solid electrolyte material according to any one of Claims 25 to 29.

31. A sulfide-based inorganic solid electrolyte film comprising:
    the sulfide-based inorganic solid electrolyte according to Claim 30 as a main component.

32. A lithium ion battery comprising:

    a positive electrode which includes a positive electrode active material layer;
    an electrolyte layer; and
    a negative electrode which includes a negative electrode active material layer,
    wherein at least one of the positive electrode active material layer, the electrolyte layer, or the negative electrode active material layer contains the sulfide-based inorganic solid electrolyte material according to any one of Claims 25 to 29.

FIG. 1

100

FIG. 2

FIG. 3

## INTERNATIONAL SEARCH REPORT

International application No.

**PCT/JP2023/027435**

### A. CLASSIFICATION OF SUBJECT MATTER

*H01B 1/06*(2006.01)i; *C01B 25/14*(2006.01)i; *H01B 1/10*(2006.01)i; *H01B 13/00*(2006.01)i; *H01M 4/13*(2010.01)i; *H01M 4/62*(2006.01)i; *H01M 10/052*(2010.01)i; *H01M 10/0562*(2010.01)i

FI: H01B1/06 A; C01B25/14; H01B1/10; H01B13/00 Z; H01M10/0562; H01M10/052; H01M4/62 Z; H01M4/13; H01B13/00 501Z

According to International Patent Classification (IPC) or to both national classification and IPC

### B. FIELDS SEARCHED

Minimum documentation searched (classification system followed by classification symbols)

H01B1/06; C01B25/14; H01B1/10; H01B13/00; H01M4/13; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-170469 A (FURUKAWA CO., LTD.) 28 October 2021 (2021-10-28) paragraphs [0014]-[0054] | 1-10, 13-16, 19, 21-24 |
| A | | 11-12, 17-18, 20, 25-32 |
| X | JP 2017-33770 A (TOKYO INST. OF TECHNOLOGY) 09 February 2017 (2017-02-09) paragraphs [0021]-[0070], fig. 1-9 | 25-28, 30-32 |
| A | | 1-24, 29 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 October 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/027435**

| Patent document cited in search report | | | Publication date (day/month/year) | Patent family member(s) | Publication date (day/month/year) |
|---|---|---|---|---|---|
| JP | 2021-170469 | A | 28 October 2021 | (Family: none) | |
| JP | 2017-33770 | A | 09 February 2017 | US 2018/0226171 A1 paragraphs [0036]-[0125], fig. 1-9 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6861869 B
- JP 2022128495 A
- JP 2022128496 A
- JP 2022128497 A

**Non-patent literature cited in the description**

- **K. HOMMA** ; **M. YONEMURA** ; **M. NAGAO** ; **M. HIRAYAMA** ; **R. KANNO**. *J. Phys. Soc. Jpn.*, 2010, vol. 79, 90-93